# EUROPEAN PATENT SPECIFICATION

(11) **EP 3 090 849 B1**
(45) Date of publication and mention of the grant of the patent: **27.03.2019**
(21) Application number: 15203014.4
(22) Date of filing: 29.12.2015
(51) Int. Cl.: B27F 1/16, B27M 1/08, B27M 3/00, B23D 45/20, B23Q 7/03

(54) **PRODUCTION LINE FOR CONTINUOUS LONGITUDINAL END-TO-END JOINTING OF OBLONG WOODEN WORKPIECES WITH VERTICAL FINGER JOINTS**
FERTIGUNGSLINIE ZUR KONTINUIERLICHEN LÄNGLICHEN ENDE-ZU-ENDE-VERBINDUNG VON LÄNGLICHEN HOLZWERKSTÜCKEN MIT VERTIKALEN KEILZINKEN
LIGNE DE PRODUCTION POUR JONCTION DE BOUT EN BOUT LONGITUDINALE CONTINUE DE PIÈCES EN BOIS OBLONGUES AVEC ABOUTAGE À ENTURES MULTIPLES VERTICALES

(30) Priority: 06.05.2015 SI 201500115
(43) Date of publication of application: 09.11.2016
(73) Proprietor: Ledinek, Gregor, 2000 Maribor (SI)
(72) Inventor: Ledinek, Gregor, 2000 Maribor (SI)
(74) Representative: Kloiber, Thomas

(56) References cited:
- EP-A2- 1 336 459
- EP-A2- 1 433 579
- FR-A1- 2 407 056
- GB-A- 292 695
- US-A- 3 527 274
- US-A- 4 941 521
- US-A- 5 617 910
- US-B1- 6 189 682

## Description

### The subject of the invention

The subject of the invention is a production line in accordance with the preamble of claim 1 for continuous longitudinal end-to-end jointing of oblong wooden workpieces with vertical finger joints, more specifically, its component working units and their individual elements for continuous production of vertical finger joints, and gluing and end-to-end jointing of wooden boards and/or wooden battens into laminated wooden workpieces of extreme lengths, including the working unit for cutting laminated wooden workpieces into smaller pieces of selected various lengths; all the mentioned component working units are technically and technologically interconnected in such a way that they represent a uniform invention idea.

### Technical problem

The technical problem solved by this invention is such a construction of the mentioned production line and of its component working units and their parts that will enable a continuous and flow-through transport, and continuous machining and jointing of oblong wooden workpieces into long laminated wooden workpieces, which will travel through the entire line and, in this way, through its individual technologically non-divisible units with great speed; the operation of its component parts will be synchronous, which is a precondition for the functioning of the entire production line. The previously mentioned continuous and synchronous functioning of the production line and a large travelling speed of wooden workpieces and of the laminated wooden workpiece will be possible by means of original construction of mentioned, sequentially connected working units and their component assemblies and parts. The construction of swivel pusher dogs on the continuous chain conveyor of the turning and feeding device, the construction of the spring gripping devices on the main continuous chain of the clamping transport assembly, the construction of the upper disc of flat links on input and output continuous flat conveyors inside the continuous press and the construction of the longitudinal and cross saw carriages, travelling at a large speed, with a circular saw blade of the flying saw, clamped between both ends of the drive timing belt are particularly innovative.

The original composition and construction of the production line according to this invention enables its high productivity of machining and high quality of laminated wooden workpieces.

### Current state of the art

There are many known solutions of constructions of individual assemblies and their component parts for producing wooden workpieces joined with face joints, which can be a part of an entire production line for continuous longitudinal gluing and jointing of wooden boards or battens and which can be used also as independent machining units for this purpose.

According to the document DE69729550 T2, a device is known for turning plates, with a shorter chain conveyor with fixed pusher dogs positioned towards the longer chain conveyor under an angle. The boards in horizontal position travel transversely towards the shorter chain conveyor with pusher dogs. Once a board reaches the corresponding pusher dog, the pusher dog turns it round its longitudinal axis by 180°. Weakness and deficiency of this solution is in the fact that it does not enable the transport of boards in vertical position, instead of this, boards are turned from one to another flat side.

According to the document WO 2007/137629 A1, a chain conveyor with foldable gripping devices is known; the gripping device is fixed to the chain from its side, the gripping device is intended for clamping thinner materials, such as a film. The clamp of the gripping device is opened, on one side and under an angle, with a guiding pin, which glides along a clamp control cam, whereas it is closed with a spring.

According to the document US 3,545,597, a top plate of a flat toothed conveyor is known, with plastic plates fixed to one continuous chain with links, which is the subject of the invention. Weakness and deficiency of this solution is in the fact that the plates are not fixed to the chain in a stable manner and that the top surface of the plates is smooth, which results in a smaller force of friction between the plates and the workpiece.

Another known solution is the flying circular saw according to the document DE 10 2006 059 803 A1, with a carriage with a saw blade that travels along guides, which is used for continuous transverse cutting of extremely long wooden workpieces at high speed. Weakness and deficiency of this solution is in the fact that the circular saw blade performs transverse cuts only in one direction by means of a guiding channel above it. During the return cycle, the saw blade lifts and then returns to its starting position on the guide. The workpieces travel through the flying saw along the fixed working table.

According to the video document entitled "Fingerjointing mill line Kontizink_EN Ledinek", available under the URL https://www.youtube.com/watch?v=u-c3zc_Vb-A, another production line is known for continuous longitudinal end-to-end jointing of oblong wooden workpieces with vertical finger joints.

According to the document EP 1 336 459 A2 a machine is known to produce toothed or wedge joints on front surfaces of oblong wood workpieces of various lengths and intersections for their later series joining, wherein the entrance and exit turnover device and oblique roller conveyor are integrated, while the conveying chain of adjacent longitudinal conveyors is equipped with movable clamping units.

According to the document GB 292 695 A a conveying or transporting device is known which is in the form of an endless band or chain carrying a series of jaw members which are automatically closed upon articles or upon wire by the movement of the band or chain to grip and retain the articles or wires while they are operated on by successive tools, the jaws being opened automatically to release the articles at the end of their travel.

Another known solution is the flying saw according to the document CN 203061977 U, which is used for transverse cutting of round and elliptical tubes, and profiles. This solution does not enable transverse cutting of long boards and of long battens at high speed.

The common weakness and deficiency of all the previously described known solutions of individual machining units is in the fact that their technical characteristics do not enable the assembly of a production line for continuous and synchronous machining and jointing of oblong wooden workpieces into laminated wooden workpieces of extreme lengths at a high travelling and machining speed. As such, they cannot be technically and technologically connected to represent a unified innovation idea, based on the mentioned characteristics, which are typical of the production line according to the invention.

In view of all this, the described weaknesses and deficiencies represent an unresolved technical problem of planning such production lines.

### The description of the invention and its use

According to the invention, the described technical problem is resolved with a high-productivity production line in accordance with claim 1 for continuous longitudinal end-to-end jointing of oblong wooden workpieces with vertical finger joints according to the filed invention, which enables continuous and flow-through transport, continuous machining and jointing of oblong workpieces into extremely long laminated wooden workpieces and cutting of these laminated wooden workpieces into smaller pieces of selected lengths, which will travel at high speed through the entire production line and, consequently, through its individual technologically inseparable units, whereas the functioning of its sequentially positioned component units and their assemblies and parts will be synchronous and without any intermediate standstills.

Wooden workpieces are preferentially oblong boards and battens, of rectangular or square cross section. By jointing boards or battens with finger end-to-end joints, laminated wooden workpieces of extreme lengths are obtained, which are, at the end of the line, cut into smaller pieces of optional lengths. Machining is continuous and synchronous through the entire line, the travelling speed of oblong wooden workpieces and of the laminated wooden workpiece is very high, consequently, also the machining speed through all the machining units, which follow one another in the characteristic technological sequence, is very high. Tests have shown that, during the production of face toothing, oblong wooden workpieces can travel at a longitudinal transport speed of 40 m/min, at 120 to 150 machined pieces per minute, and laminated wooden workpieces can travel through the continuous press at a transport speed, which enables 200 joined linear m/min.

In addition to the innovative solutions of the structure of individual working units and of the entire production line, the transport path of wooden workpieces and of the laminated wooden workpiece through the entire production line according to the invention, as well as the method of their machining and production are also innovatively resolved.

At the start of the production line, oblong wooden workpieces are inserted flat, with the wider surface downwards, between fixed pusher dogs of the input conveyor, which moves them in the direction of the turning and feeding device. In the turning and feeding device, the workpieces laid flat are turned by 90° so that they are placed on their narrower surface, in vertical position. This is carried out continuously, while oblong wooden workpieces travel in the linear direction.

Later oblong wooden workpieces in vertical position are transversely inserted, through the loading rolls, into the open spring gripping devices on the main conveyor chain. In this position and while longitudinal transport goes on continuously, oblong wooden workpieces within the spring gripping devices are aligned vertically by means of pneumatic pressing bars above them and at the same time they are clamped by means of a movable pressing clamp and a compression spring of the spring gripping device.

The oblong wooden workpieces clamped into the spring gripping devices travel past the first machining unit for aligning the face surface of oblong wooden workpieces and for producing vertical teeth. During further continuous longitudinal transport of oblong wooden workpieces, the spring gripping devices partly open in the area of the diagonal chain conveyor, afterwards the pusher dogs of the diagonal chain conveyor transversely push the oblong wooden workpieces through the spring gripping devices to the auxiliary conveyor opposite.

The oblong wooden workpieces clamped into the spring gripping devices travel past the second machining unit on the opposite side of the main conveyor chain, where the operations of aligning the face ends of workpieces, of milling of vertical teeth and of applying glue on one side, on the produced teeth, are repeated.

After the toothing is carried out on both sides and the glue is applied on one side, oblong wooden workpieces are vertically pushed from the open spring gripping devices with the outfeed rotor and placed flat on the transverse conveyor, which carries them to the wheels of the angle infeed unit, which pushes them into the assembling unit in front of the continuous press.

As the oblong wooden workpieces travel sequentially, one after another, they catch each other in the assembling unit, in the face teeth, which were produced on both sides, and they are joined into a laminated wooden workpiece, which continuous travelling into the continuous press.

In the continuous press, continuous pressing of the laminated wooden workpiece made of previously assembled oblong wooden workpieces is carried out.

The produced laminated wooden workpiece of extreme length travels through the continuous press between the top and bottom flat chain. To additionally increase the friction between the laminated wooden workpiece and the flat chains, at least one cross groove is made into their upper surface.

In the continuous press, the pressing force is produced due to the difference in the speed of the input unit and the speed of the output unit with pairs of flat chains, which results in the difference in the travelling speed of the laminated wooden worpiece, which is inside the input unit, and the part of the laminated wooden workpiece, which is inside the output unit. As a rule, the speed of the input unit is higher than the speed of the output unit.

In the pressing unit, the pressed laminated wooden workpiece travels, along the smooth upper surface of the drive timing belt, further into and through the flying saw. The longitudinal saw carriage grabs the travelling laminated wooden workpiece at the selected distance from the cut-off face, determined by means of the measuring wheel, and then it travels, together with it, along the linear guides longitudinally through the flying saw. A cross saw carriage with a driven saw blade, which cuts, during transverse movement, the laminated wooden workpiece into smaller pieces of required lengths, is placed on the longitudinal saw carriage. It is characteristic that the circular saw blade cuts the laminated wooden workpiece in both transverse directions, when moving forward and when returning backward to its starting position, without any dead cycle, which is cyclically repeated.

The cut-off smaller piece of the laminated wooden workpiece travels from the flying saw further to the stacking unit, which is, however, not presented.

The assembly and the sequence of the machining units within the production line, their construction as well as the machining method represent innovativeness of the presented invention.

The invention will be more precisely described in relation to the preferential feasibility example and figures, which show as follows:
- Fig. 1: production line for continuous longitudinal end-to-end jointing of oblong wooden workpieces with vertical finger joints according to the invention, axonometric projection;
- Fig. 2: chain arm of the turning and feeding device with swivel pusher dogs as component units of the production line according to Fig. 1, orthogonal projection, side view;
- Fig. 3: swivel pusher dog of the turning and feeding device according to Fig. 2;
- Fig. 4: main conveyor chain with the spring gripping devices as a component machining unit of the production line according to Fig. 1, axonometric projection;
- Fig. 5: same as in Fig. 4, only main conveyor chain detail at the side of the drive sprocket;
- Fig. 6: spring gripping device of the main conveyor chain, side view of the orthogonal projection;
- Fig. 7: same as in Fig. 6, only isometric projection;
- Fig. 8: continuous press, side view of orthogonal projection;
- Fig. 9: same as in Fig. 8, only detail of input and output units of the continuous press;
- Fig. 10: flat link of the top and/or bottom flat chain, isometric projection;
- Fig. 11: same as in Fig. 10, only side view;
- Fig. 12: same as in Fig. 11, only in cross section A-A;
- Fig. 13: flying saw as a component unit of the production line according to Fig. 1, isometric projection;
- Fig. 14: longitudinal carriage with cross carriage of the flying saw according to

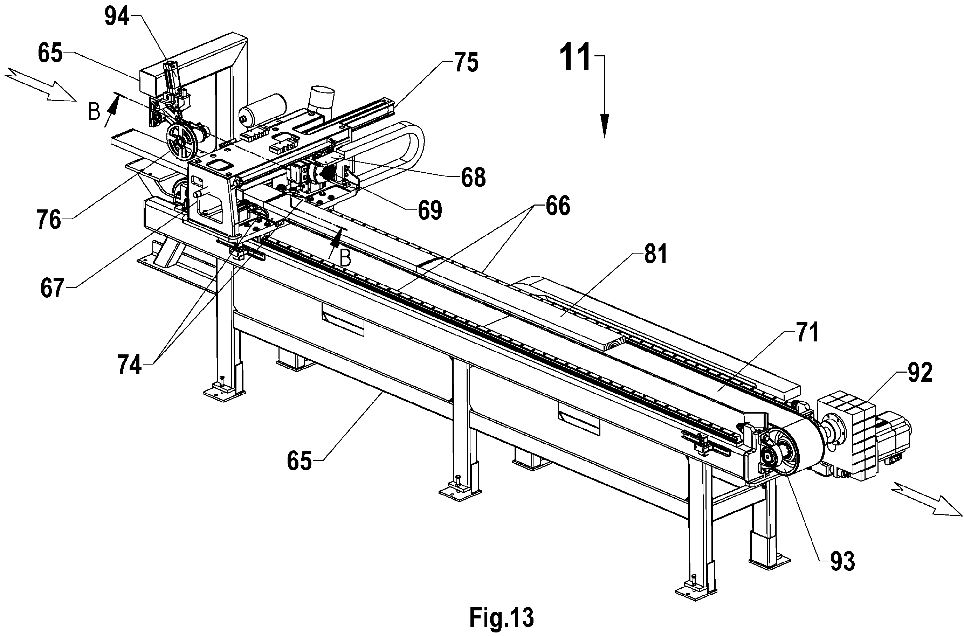

- Fig. 13,: longitudinal cross section B-B;

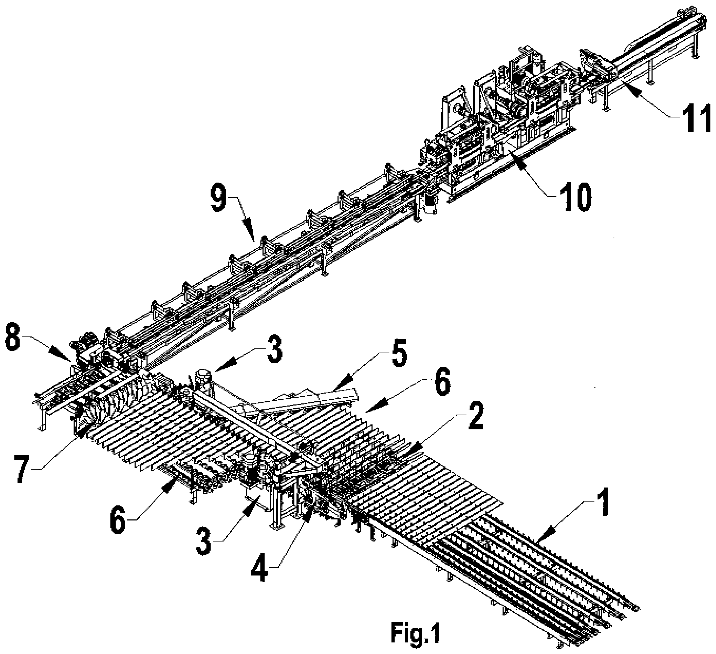

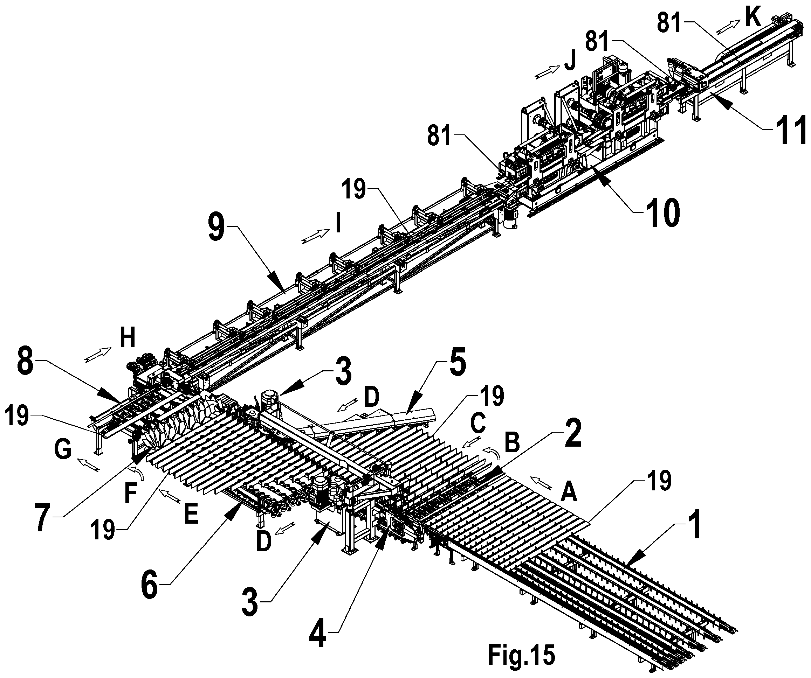

- Fig. 15: same as in Fig. 1, only schematic presentation of the process of continuous production of oblong wooden workpieces joined longitudinally, as a method.

Individual designations in Figures indicate:
- **1**: INPUT CHAIN CONVEYOR
- **2**: TURNING AND FEEDING DEVICE
- **3**: MACHINING UNIT
- **4**: MAIN CONVEYOR CHAIN
- **5**: DIAGONAL CHAIN CONVEYOR
- **6**: AUXILIARY CHAIN CONVEYOR
- **7**: OUTFEED ROTOR
- **8**: ANGLE INFEED UNIT
- **9**: ASSEMBLING UNIT
- **10**: CONTINUOUS PRESS
- **11**: FLYING SAW
- **12**: PUSHER DOG
- **13**: CHAIN
- **14**: TENSIONING SPROCKET
- **15**: TENSIONING SPROCKET
- **16**: DRIVE SPROCKET
- **17**: TURNING SPROCKET
- **18**: LOADING ROLL
- **19**: WOODEN WORKPIECE
- **20**: DRIVE CHAIN
- **21**: CLAMP CONTROL CAM
- **22**: VERTICAL LEG
- **23**: HORIZONTAL LEG
- **24**: RUNNING WHEEL
- **25**: PIVOT
- **26**: DRIVE SPROCKET
- **27**: TENSIONING SPROCKET
- **28**: SPRING GRIPPING DEVICE
- **29**: FRAMEWORK
- **30**: GUIDE
- **31**: CLAMP CONTROL CAM
- **32**: LIFTING MECHANISM
- **33**: CHAIN LINK BASE BODY
- **34**: SWIVEL LEVER
- **35**: CENTRE OF ROTATION
- **36**: RUNNING WHEEL
- **37**: HINGE
- **38**: MOVABLE PRESSING CLAMP
- **39**: FIXED CLAMP
- **40**: GUIDE
- **41**: COMPRESSION SPRING
- **42**: GUIDING WHEEL
- **43**: SIDE STOP
- **44**: INPUT UNIT
- **45**: OUTPUT UNIT
- **46**: TOP FLAT CHAIN
- **47**: BOTTOM FLAT CHAIN
- **48**: TOP FLAT CHAIN
- **49**: BOTTOM FLAT CHAIN
- **50**: FLAT LINK
- **51**: CROSS GROOVE
- **52**: DOWEL PIN
- **53**: SIDE LAMELLA
- **54**: BEARING BUSH
- **55**: LIFTING CYLINDER
- **56**: SWIVEL LEVER
- **57**: SWIVEL LEVER
- **58**: PIVOT
- **59**: CLAMPING POINT
- **60**: CLAMPING POINT
- **61**: LAMELLA
- 62: AIR CYLINDERS
- 63: CHAIN CONVEYOR
- 64: GLIDING PLATE
- 65: FRAM EWORK
- 66: LINEAR RAIL GUIDE
- 67: LONGITUDINAL SAW CARRIAGE
- 68: CROSS SAW CARRIAGE
- 69: DRIVE MOTOR
- 70: CIRCULAR SAW BLADE
- 71: TIMING BELT
- 72: CLAMPING PLATE
- 73: TOP CLAMP
- 74: SIDE CLAMP
- 75: PNEUMATIC CYLINDER
- 76: MEASURNIG WHEEL
- 77: PRESSING BARS
- 78: HYDRAULIC CYLINDER
- 79: DIFFERENTIAL GEAR
- 80: HYDRAULIC CYLINDER
- 81: LAMINATED WOODEN WORKPIECE
- 82: INCLINE
- 83: STOP
- 84: CONNECTIVE PLATE
- 85: HORIZONTAL SERRATION
- 86: VERTICAL SERRATION
- 87: EDGE CHAMPFER
- 88: EDGE CHAMPFER
- 89: DOWEL PIN
- 90: HOLE
- 91: TRANSVERSE GUIDE
- 92: DRIVE ELECTRIC MOTOR
- 93: BELT PULLEY
- 94: PNEUMATIC CYLINDER
- 96: HELIX

A- the direction of linear travelling of an oblong wooden workpiece 19, placed flat along the input chain conveyor 1
B- the direction of turning of oblong wooden workpieces 19 from horizontal into vertical position in the turning and feeding device 2
C- the direction of transverse crossing of oblong wooden workpieces 19 from the turning and feeding device 2 into the spring gripping devices 28 on the main conveyor chain 4
D- the direction of transverse movement of an oblong wooden workpiece 19, toothed on one side, through the spring gripping device 28 on the main conveyor chain 4
E- the direction of travelling of oblong wooden workpieces 19 past or near the machining units 3
F- the direction of the rotating crossing of oblong wooden workpieces 19 from the spring gripping devices 28 on the main conveyor chain 4 via the outfeed rotor 7, the oblong wooden workpieces 19 are returned from the vertical to the horizontal-flat position
G- the longitudinal direction of travelling of oblong wooden workpieces 19 to the angle infeed unit 8
H- the longitudinal direction of travelling of oblong wooden workpieces 19 from the angle infeed unit 8 to the assembling unit 9
I- the direction of travelling of oblong wooden workpieces 19 along the assembling unit 9 - the phase of jointing them into the laminated wooden workpiece 81 of extreme length
J- the direction of continuous pressing of oblong wooden workpieces 19 into the extremely long laminated wooden workpiece 81 in the continuous press 10
K- the direction of travelling of the laminated wooden workpiece 81 through the flying saw 11, in the phase of cutting it into smaller pieces of various desired lengths

The main characteristic of this invention is the production line for continuous longitudinal end-to-end jointing of oblong wooden workpieces 19 of quadrangular cross section, such as boards, battens, lamellas, etc. into extremely long laminated wooden workpieces 81 and cutting them into smaller pieces of various desired lengths; oblong wooden workpieces 19 and later the laminated wooden workpiece 81 travel through the production line continuously and at high speed, without any intermediate stops. To achieve these characteristics of the invention, the construction of all the machining units within the production line are appropriately adapted and made.

In Fig. 1, the presented production line for continuous longitudinal end-to-end jointing of oblong wooden workpieces with vertical fingerjoints consists of input chain conveyor 1, turning and feeding device 2, two machining units 3, main conveyor chain 4, diagonal chain conveyor 5, auxiliary chain conveyor 6, outfeed rotor 7, angle infeed unit 8, assembling unit 9, continuous press 10 and flying saw 11, which follow one another continuously in the specified sequence and are connected with one another in a fixed way. In floor plan, the aforementioned component units of the production line are connected with each other in the form of an angle, the legs of which are connected with the angle infeed unit 8 so that they form an angle. The legs can be made in one or in the opposite direction - a left and/or right construction.

The input chain conveyor 1 is of classical construction and is equipped with fixed pusher dogs (not shown in the figures) and is so long that it reaches the end of the chain arm of the turning and feeding device 2.

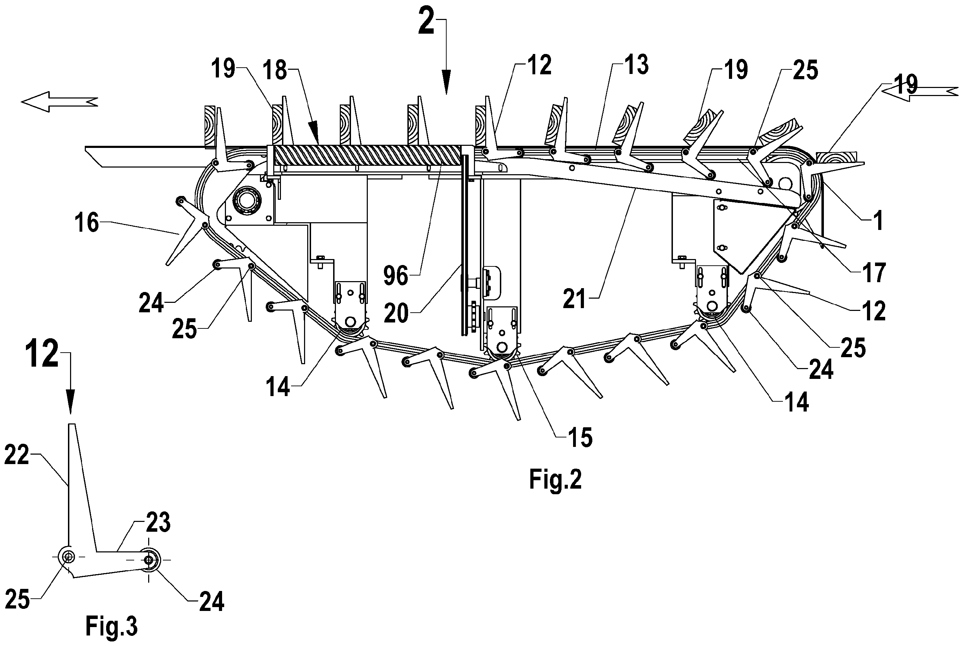

In Fig. 2, one of the chain arms of the turning and feeding device 2 is presented, the number of chain arms depends on the length of input oblong wooden workpieces 19. In the feasibility example according to the invention, the turning and feeding device 2 consists of seven parallel built-in chain arms, in some other feasibility example, the number of chain arms can be smaller or larger. Each chain arm consists of a continuous chain 13, which has swivel pusher dogs 12 fixed with pivots 25 along the entire circumference; the distance between these pusher dogs 12 is slightly larger than the width of the oblong wooden workpieces 19. Furthermore, the chain arm consists of the drive sprocket 16 for the drive of the chain 13 with pusher dogs 12, the tensioning
sprockets 14 and 15, the turning sprocket 17, the loading roll 18, which has a helix 96 made on its entire circumference and which is driven by means of the drive chain 20, and the clamp control cam 21.
Parallel and in the same plane as the chain arm of the turning and feeding device 2, the input chain conveyor 1 is positioned, with fixed pusher dogs (not shown in the figures),
which travel slightly in front of the pusher dogs 12 so that, together, they form intermediate spaces, where the vertically positioned oblong wooden workpieces 19 are positioned.
Pusher dogs 12 are constructed in the form of a block letter L, with the longer vertical leg 22 and a slightly shorter horizontal leg 23 and with a pivot 25 in their intersection point. At the end of the horizontal leg 23, the running wheel 24 is clamped so that it can rotate. The described example is presented in Fig. 3.

The oblong wooden workpieces 19 rest on the vertical leg 22 of the pusher dogs 12, while the running wheel 24 on the horizontal leg 23 travels along the clamp control cam 21. During the operation of the continuous chain 13, the swivel pusher dogs 12 with the returning wheel 24 travel along the clamp control cam 21 and gradually, together with oblong wooden workpieces 19, they are turned from the horizontal position to the vertical position so that, in the final phase, they are placed under the angle of 90°. Thereby, the swivel pusher dogs 12 of the turning and feeding device 2 with fixed pusher dogs (not shown in the figures) of the input chain conveyor 1 form intermediate spaces, where the oblong wooden workpieces 19 are kept in the vertical position while they travel through the turning and feeding device 2. Afterwards, the oblong wooden workpieces 19 come onto the loading
rolls 18, which push them in the transverse direction into the open spring gripping devices 28 on the main conveyor chain 4. If an oblong wooden workpiece 19 is thereby halted by pusher dogs 12, it is moved away from them with the helix 96 on the loading roll 18, afterwards it can continue its travelling into the spring gripping devices 28.

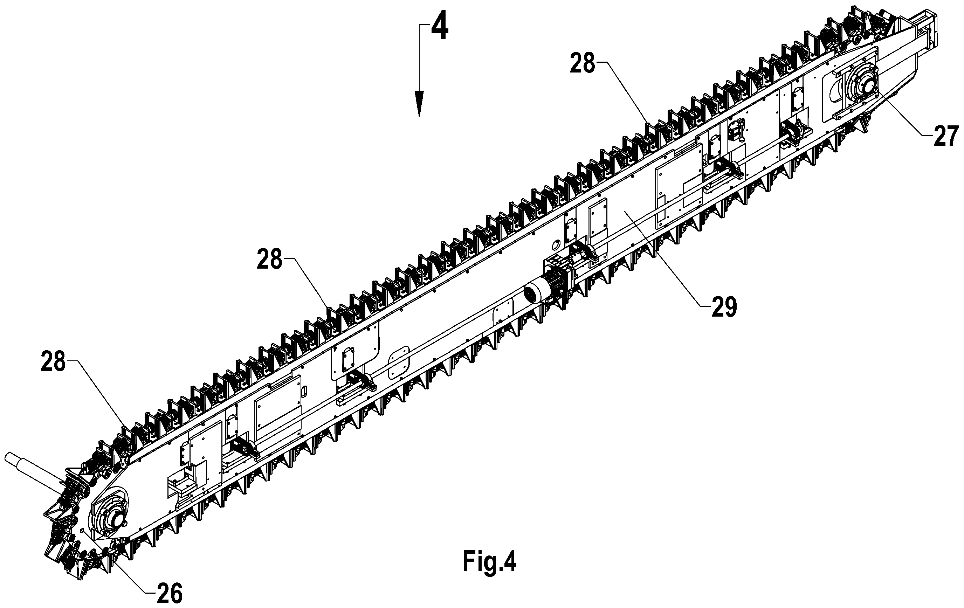

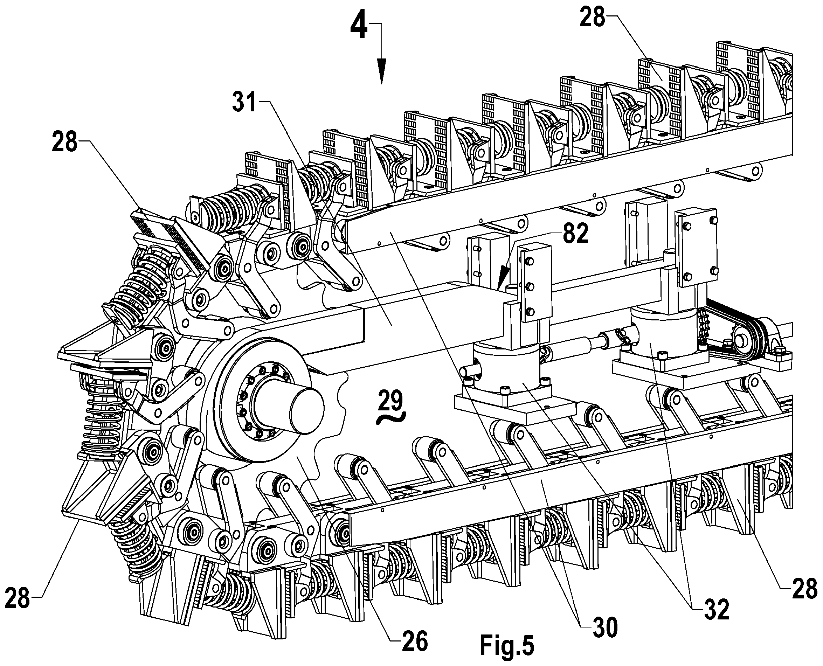

In Fig. 4 and in Fig. 5, the main conveyor chain 4 is presented, which is positioned between the turning and feeding device 2, the diagonal chain conveyor 5 and the machining unit 3 on one side and the other machining unit 3 and the auxiliary chain conveyor 6 on the opposite side of the production line. The main conveyor chain 4 is, through the spring gripping devices 28, positioned along the circumference of the framework 29, to which the lower and upper linear guides 30 of C cross section are fixed, along which the guiding wheels 42 travel into the continuous main conveyor chain 4 of the joint spring gripping devices 28, which are positioned one after another in a continuous sequence. Between the linear guides 30, the clamp control cam 31 is horizontally fixed to the framework 29, with the incline 82 of a suitable pitch, which is adjustable in height by means of a lifting mechanism 32. The clamp control cam 31 is intended for opening the movable pressing clamp 38 in the spring gripping devices 28 while loading the oblong wooden workpieces 19 for their transverse pushing to the diagonal conveyor and for their release before reaching the outfeed rotor 7.
The main conveyor chain 4 with the spring gripping devices 28 is of continuous structure and it runs along the entire circumference of the framework 29 and via the drive sprocket 26 and the tensioning sprocket 27.

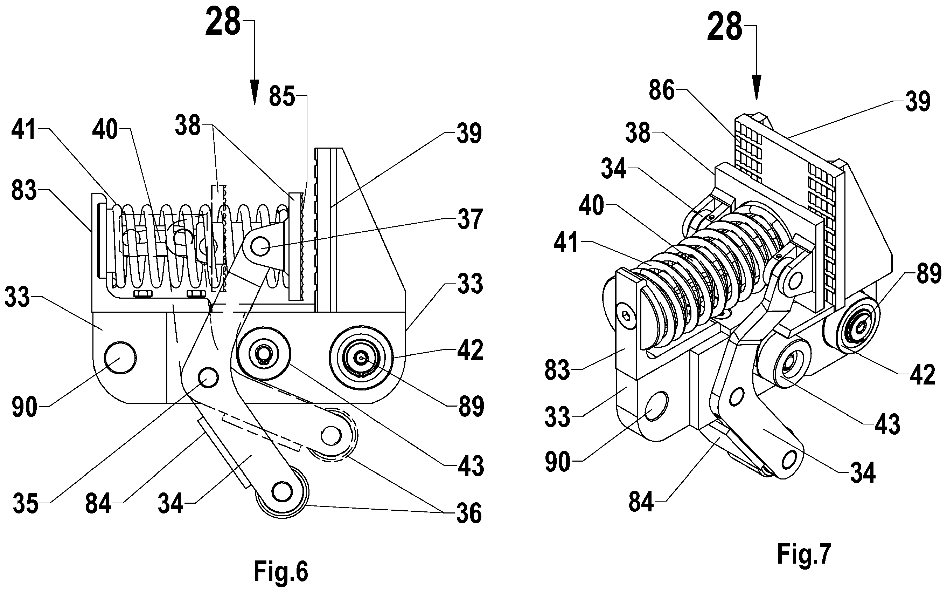

In Fig. 6 and in Fig. 7, the spring gripping device 28 is presented, with the fixed clamp 39 and the movable pressing clamp 38, which is parallel to it and which represents a segment of the main conveyor chain 4. Into the outer, larger surface of the fixed clamp 39, the vertical serration 86 is made, whereas, into the outer, larger surface of the movable pressing clamp 38, the horizontal serration 85 is made, due to which, when an oblong wooden workpiece 19 is clamped, the clamps 38 and 39 bite into its soft surface; at the same time, they make it possible for the oblong wooden workpiece 19 to be immovably clamped in both directions, transversely to the serration 85 and the serration 86 on the clamps 38 and 39.

To the upper surface of the chain link base body 33 of the spring gripping device 28, the fixed clamp 39 is fixed at one end, and the stop 83 is fixed at the other end, while, between them, the movable pressing clamp 38 with the guide 40 is fixed, onto which the compression spring 41 is put. On each side of the chain link base body 33, via the centre of rotation 35, a swivel lever 34 of angular form is movably fixed to it; the swivel levers 34 are connected below with the connective plate 84. The two swivel levers 34 have a running wheel 36 fixed to them at the lower end; with their opposite end, they are, via the hinge 37, movably fixed to the movable pressing clamp 38. Perpendicularly to the back side of the movable pressing clamp 38, the guide 40 is firmly fixed, onto which the compression spring 41 is put, which, with one end, abuts on the movable pressing clamp 38, and with the other end, to the stop 83. The movable pressing clamp 38 is positioned parallel to the fixed clamp 39, under which, with a distance between them on both sides of the chain link base body 33, the guiding wheel 42 and the side stop 43 are placed.

Segmented spring gripping devices 28 are fixed with dowel pins 89 so that they can move, while dowel pins 89 are inserted through the hole 90 in the chain link base body 33 and they have two guiding wheels 42 placed on both ends so that they form the continuous main conveyor chain 4. As previously mentioned, the main conveyor chain 4 is positioned on the framework 29 and via the drive sprocket 26 and the tensioning sprocket 27 so that the guiding wheels 42 of the spring gripping devices 28 run inside the side guides 30, while their side guiding is controlled by side stops 43.

The movable pressing clamp 38 of the spring gripping devices 28 opens with the move of the swivel lever 34 in the direction of the stop 83, while the swivel levers 34 with the running wheels 36 glide along the clamp control cams 31, positioned inside the framework 29. The movable pressing clamp 38 is, therefore, opened, i.e. it is moved away from the fixed clamp 39 when the running wheels 36 move up along the incline 82 to the clamp control cam 31, due to which the swivel levers 34 in the centre of rotation 35 rotate slightly in the direction of the stop 83. Linear movement of the movable pressing clamp 38, which is pivotally fixed to the swivel levers 34, directs the guide 40 and, in this way, it is made impossible for the movable pressing clamp 38 to get obliquely to the fixed clamp 39. The guide 40 is constructed in such a way that it enables minimum clearance which allows that the movable pressing clamp 38 is adjusted to the position of the oblong wooden workpieces 19, clamped between the movable pressing clamp 38 and the fixed clamp 39. This is important when inserting oblong wooden workpieces 19 into the spring gripping devices 28 as they would, if the movable pressing clamp 38 was placed obliquely, hit it and the loading rolls 18 could not push them between and through the clamps 38 and 39.

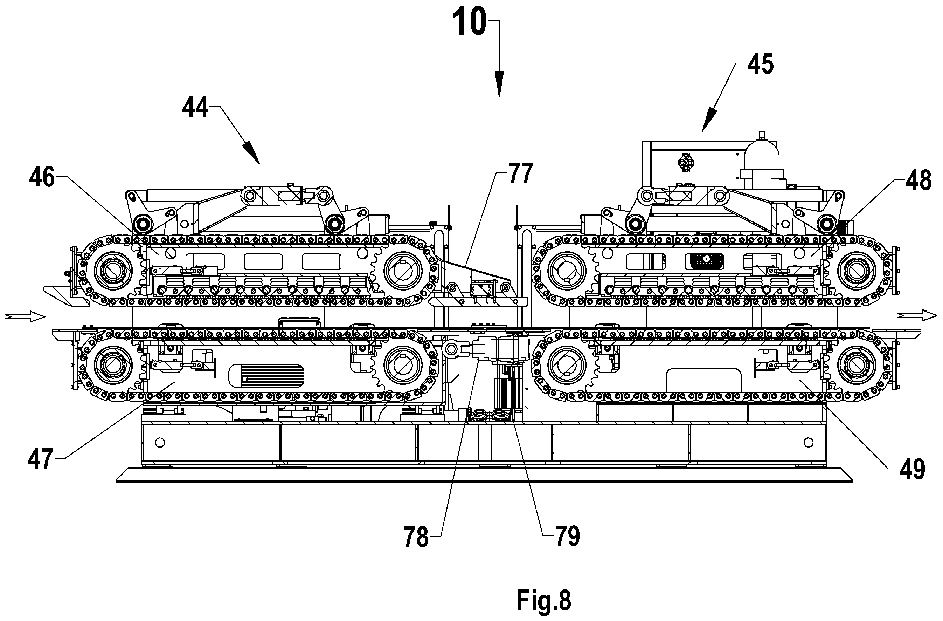

In Fig. 8, the continuous press 10 is presented, which consists of the input unit 44 with top flat chain 46 and the bottom flat chain 47, and the output unit 45 with the top flat chain 48 and the bottom flat chain 49. Between the input unit 44 and the output unit 45, the pressing bars 77 are positioned, between them the hydraulic cylinder 78 and the differential gear 79 are positioned.

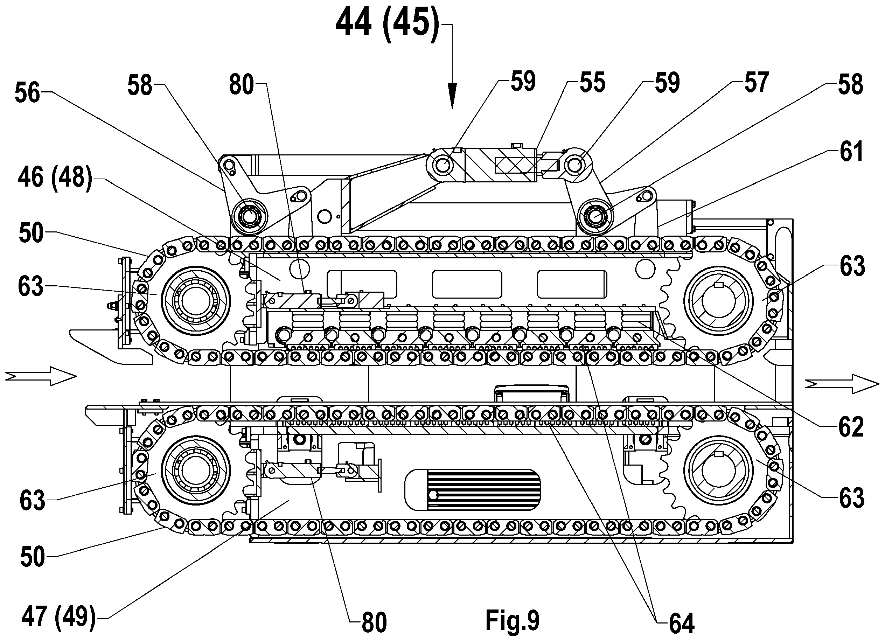

In Fig. 9, the input unit 44 is presented, which is of identical construction as the output unit 45, consequently, the common description of both units follows.

As previously mentioned, the input unit 44 consists of the top flat chain 46 and the bottom flat chain 47, while the output unit 45 consists of the top flat chain 48 and the bottom flat chain 49.

The top flat chain 46 consists of flat links 50, which are mutually movably joined, in linear sequence, and it runs through a pair of chain conveyors 63, which have a space between them. Inside the circumference of the top flat chain 46 and between the two chain conveyors 63, the air cylinders 62 are placed in line; under the air cylinders 62, the gliding plate 64 is placed, the length of which is preferentially the same as the length of the set of the air cylinders 62. Above the air cylinders 62 and along the chain conveyor 63, the cylinder 80 is placed, for tensioning the top flat chain 46.

Above the top flat chain 46, the swivel levers 56 and 57 are placed for height adjustment of the top flat chain 46 and of the top flat chain 48, between which the lifting cylinder 55 is movably clamped via the clamping points 59. The movability of the swivel levers 56 and 57 is made possible with two pivots 58. The swivel lever 57 is connected with the lamella 61.

Also the bottom flat chain 47 consists of flat links 50, which are mutually movably joint, in linear sequence, and it runs through a pair of chain conveyors 63, which have a space between them. In the upper part, under the bottom flat chain 47, a fixed gliding plate 64 is constructed in such a way that it is positioned opposite to and slightly away from the fixed gliding plate 64 of the top flat chain 46. At the chain conveyor 63, the hydraulic cylinder 80 is also placed, for tensioning the bottom flat chain 47.

The lower edge of the top flat chain 46 and the upper edge of the bottom flat chain 47 have a space between them, which is at least as thick as is the thickness of the laminated wooden workpiece 81.

As previously mentioned, the flat chains 46, 47, 48 and 49 consist of sequentially put flat links 50 with edge champfers 87, 88 and cross groove 51. The flat links 50 are joined with one another with two dowel pins 52 for each joint and with pairs of side lamellas 53, which connect dowel pins 52 with one another. The dowel pins 52 are inserted through bearing bushes 54, placed into oblong holes (not shown in the figures) in the flat links 50.

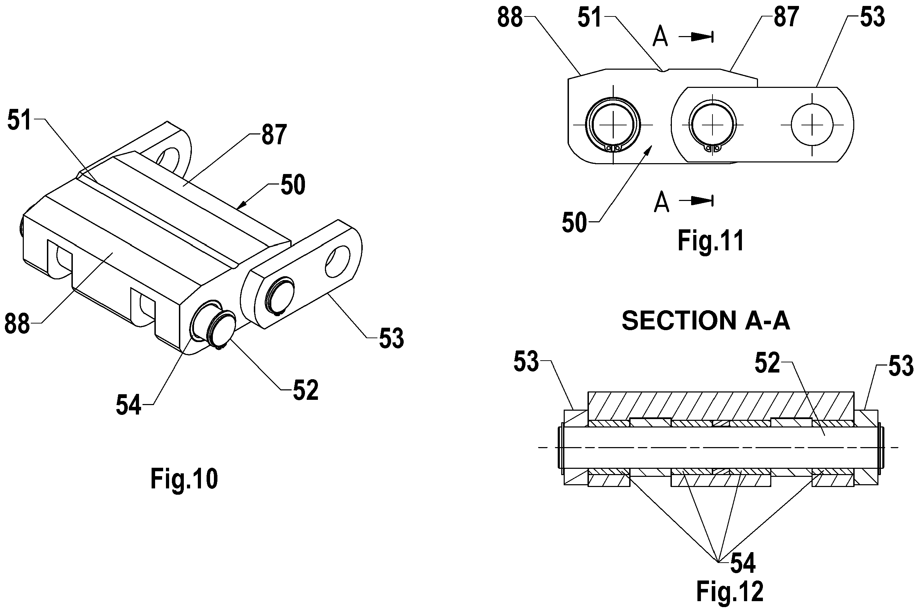

As previously mentioned, at least one cross groove 51 is made into the upper surface of the flat links 50. In some other feasibility example, which is not presented, the number of cross grooves 51 can be larger, they can be made under different angles or the entire surface of the flat links 50 can be optionally serrated or toothed.
The described example is presented in Fig. 10, Fig. 11 and Fig. 12.

In Fig. 13, the flying saw 11 is presented, with the linear rail guides 66 fixed on the framework 65; along the rail guides 66, the longitudinal saw carriage 67 with the cross saw carriage 68 travels. The drive of the longitudinal saw carriage 67 is constructed through the timing belt 71, the ends of which are, with serrated clamping plates 72, fixed to the longitudinal saw carriage 67. The timing belt 71 is driven by the drive electric motor 92 by means of the belt pulley 93.

The flat top surface of the timing belt 71 is preferentially lined with nylon, which reduces the friction coefficient between the timing belt 71 and the laminated wooden workpiece 81, whereas its bottom surface is toothed. In addition to the drive of the longitudinal saw carriage 67 and the transport of the laminated wooden workpiece 81, the timing belt 71 also has the function of the load-bearing or supporting surface during cutting of the laminated wooden workpiece 81 with the circular saw blade 70.

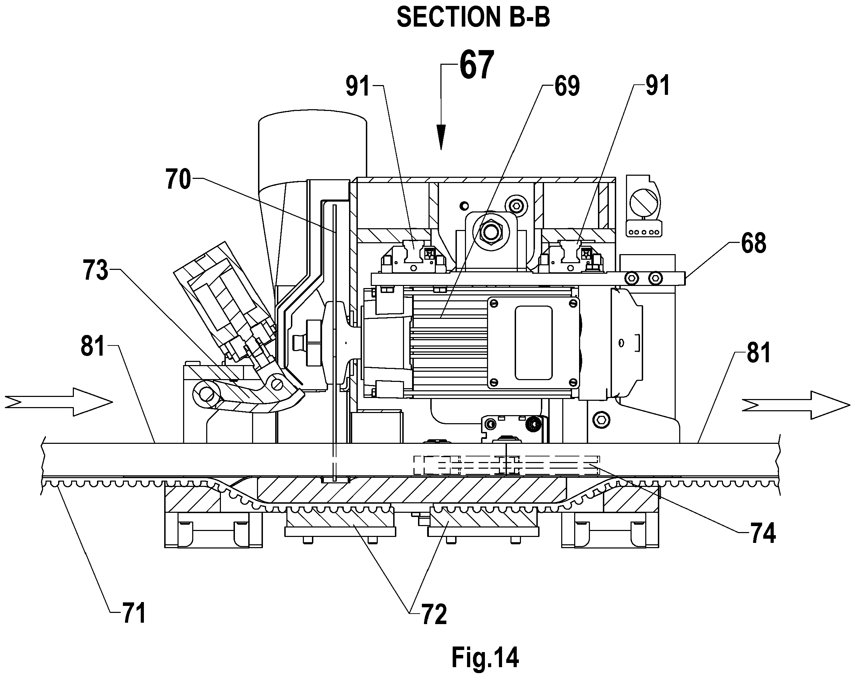

As presented in Fig. 14, the top clamp 73 and a pair of side clamps 74 are fixed movably to the longitudinal saw carriage 67; the clamps 73 and 74 enable that the longitudinal saw carriage 67 is firmly clamped to the laminated wooden workpiece 81 when it travels together with it.

At the input side of the flying saw 11, the rotating measuring wheel 76, which is pushed towards and on the laminated wooden workpiece 81 surface by the pneumatic cylinder 94, is pivotally clamped to the framework 65.

The cross saw carriage 68 with the circular saw blade 70, which travels along the transverse guides 91 in both directions and is driven by the pneumatic cylinder 75, is movably positioned to the longitudinal saw carriage 67. Also the drive motor 69 of the circular saw blade 70, which is put directly to its drive axis, is fixed to the cross saw carriage 68. This is presented in Fig. 14.

In Fig. 15, the method or flowchart of the technological process of the production line for continuous longitudinal jointing of oblong wooden workpieces with vertical finger joints and their cutting into smaller pieces according to the applied for invention is presented. The direction of travelling of oblong wooden workpieces 19 and later of laminated wooden workpieces 81 and their machining procedures are indicated with arrows marked with letters from A to including K. For a complete insight into the procedure, also figures of individual, previously described component machining units of the line can be used.

In the beginning of the production line, oblong wooden workpieces 19 are inserted flat between fixed pusher dogs (not shown in the figures)on the input chain conveyor 1, and,
in direction A, they come linearly between the swivel pusher dogs 12 on the chain arm of the turning and feeding device 2, where the oblong wooden workpieces 19 are, in direction B, continuously turned from flat to vertical position by means of the clamp control cam 21, on which pusher dogs 12 with running wheels 24 travel. Fixed pusher dogs (not shown in the figures) of the input chain conveyor 1,
which travels synchronously with the turning and feeding device 2, ensure that the oblong wooden workpieces 19 remain in the vertical position during their travel towards the loading roll 18.

The oblong wooden workpieces 19 are, in their vertical position, by means of the loading rolls 18 of the turning and feeding device 2, in direction C, transversely inserted into the open spring gripping devices 28 on the main conveyor chain 4 in such a way that, with their ends, they protrude slightly over the edge of the spring gripping devices 28. The loading rolls 18 have a helix 96 on their circumference, by means of which oblong wooden workpieces 19, which, in direction C, are halted by the pusher dogs 12, are moved away from them and continue their travel Into the spring gripping devices 28 on the main conveyor chain 4.

The openness of the spring gripping devices 28, i.e. the space between the movable pressing clamp 38 and the fixed clamp 39, which is, as a rule, larger than the thickness of oblong wooden workpieces 19, is previously set by means of the clamp control cam 31, the height of which can be adjusted and which, via the swivel lever 34, opens the movable pressing clamp 38.

When the oblong wooden workpieces 19 reach the spring gripping devices 28 and when they come to the stop, they are aligned at the top vertically by means of unpresented pneumatic pressing bars. Afterwards, the oblong wooden workpieces 19 are clamped into the spring gripping devices 28 by means of the compression spring 41, which pushes the movable pressing clamp 38 towards the oblong wooden workpieces 19 and presses them against the fixed clamp 39. Moving of the oblong wooden workpieces 19 is additionally prevented by the horizontal serration 85 on the movable pressing clamp 38 and by the vertical serration 86 on the fixed clamp 39.

The oblong wooden workpieces 19, clamped in the spring gripping devices 28, continue travelling past the first machining unit 3, which consists of a mitre saw for aligning face edges and of profile milling cutters for milling the teeth into the aligned face surface.

After machining of one side is finished in the area of the diagonal chain conveyor 5, the spring gripping devices 28 on the main conveyor chain 4 open and release the oblong wooden workpieces 19. Then the pusher dogs (not shown in the figures) of the diagonal chain conveyor 5 push them in direction D transversely through the spring gripping devices 28 to the other side on the auxiliary chain conveyor 6 in such a way that the still unmachined ends of the oblong wooden workpieces 19 protrude slightly over the edge of the clamps 38, 39 of the spring gripping devices 28.

Afterwards the oblong wooden workpieces 19 are vertically aligned, clamped between the clamps 38, 39 of the spring gripping devices 28 and, in direction E, the still unmachined ends are machined in the other machining unit 3 at the opposite side, which is identical with the previously described machining in the first machining unit 3, only that the glue is applied on one side, on the produced teeth.

After machining in the second machining unit 3 is finished, the clamps 38, 39 of the spring gripping devices 28 on the main conveyor chain 4 open and oblong wooden workpieces 19 are removed from the spring gripping devices 28 by means of the outfeed rotor 7 in direction F and then they are moved in direction G and put on acceleration belts (not shown in the figures) in front of the angle infeed unit 8; acceleration belts deliver them on acceleration wheels (not shown in the figures) of the angle infeed unit 8, which then push them, in direction H, between the guide side chains on the assembling unit 9, which are set to the width of the oblong wooden workpieces 19.

In the mentioned assembling unit 9, the toothed ends of the oblong wooden workpieces 19, which travel sequentially, one after another, in direction I, catch one another and they are joined with vertical finger joints. In such a way, the oblong wooden workpieces 19 are joined into a very long laminated wooden workpiece 81, the length of which can be extreme. Afterwards the laminated wooden workpiece 81 reaches the input unit 44 of the continuous press 10, where continuous pressing in the zones of vertical finger joints is carried out in direction J until they exit the output unit 45.

In this way the laminated wooden workpiece 81 travels between the top flat chain 46 and the bottom flat chain 47 of the input unit 44 and later also between the top flat chain 48 and the bottom flat chain 49 of the output unit 45. The force required for pressing the vertical joints along the length of the laminated wooden workpiece 81 is produced due to the difference between the travelling speed between the pair of flat chains 46, 47 and the pair of flat chains 48, 49. The latter pair namely travels a bit slower than the former pair. The difference in speed of one and of the other pair is regulated with the differential gear 79, which has an impact upon the size of the force that presses the laminated wooden workpiece 81. In the continuous press 10, the force required for pressing vertical finger joints on the laminated wooden workpiece 81 depends primarily on the cross section of the laminated wooden workpiece 81 and of the wood type. Larger pressure in the horizontal axis ensured with the hydraulic cylinder 78 on the input pair of flat chains 46 and 47 means larger pressing force and vice-versa. Also the size of the difference in travelling speed of the laminated wooden workpiece 81 within the input unit 44 and the output unit 45 has an impact upon the pressing force.

Between the linearly movable input unit 44 and the firmly fixed output unit 45, the hydraulic cylinder 78 for pressing oblong wooden workpieces 19 or the laminated wooden workpiece 81 and the differential gear 79 for setting the speed difference between the pairs of flat chains 46, 47 of the input unit 44 and the pairs of flat chains 48, 49 of the output unit 45 are placed.

During the previously described pressing, the top flat chains 46 and 48, via the air cylinders 62, produce the pressing force required to obtain friction between the laminated wooden workpiece 81 and the pairs of previously mentioned flat chains 46, 47 and 48, 49, because of which the laminated wooden workpiece 81 does not glide longitudinally during pressing. To increase friction, all the described flat chains 46, 47, 48 and 49 have at least one cross groove 51 made into the flat links 50 they consist of or they can be fully serrated.

The movable input unit 44 is placed on unpresented linear guides and can be moved longitudinally in the pressing direction by means of the hydraulic cylinder 78. In case of the previously set pressing force of the laminated wooden workpiece 81 in the continuous press 10, the hydraulic cylinder 78 serves to regulate the actual pressing force required in case of the slip of the flat links 50, if it comes to it, on the bottom flat chain 47 and/or on the bottom flat chain 49 towards the laminated wooden workpiece 81.

The pressed laminated wooden workpiece 81 continues its travel continuously from the continuous press 10 into the flying saw 11 via the timing belt 71 through the housing of the longitudinal saw carriage 67. Thereby the longitudinal saw carriage 67 becomes positioned towards the laminated wooden workpiece 81 as regulated by the measuring wheel 76 at the entrance into the continuous press 10. At the selected length, measured with the measuring wheel 76, the longitudinal saw carriage 67, via the top clamp 73 and a pair of side clamps 74, hugs the laminated wooden workpiece 81 firmly and, on the linear rail guides 66, it travels together with it in direction K. During their common travel, the cross saw carriage 68, together with the circular saw blade 70, which is driven by the drive motor 69, comes perpendicularly to the longitudinal axis of the laminated wooden workpiece 81 and in this way, it cuts it to the desired/required length. When the cross saw carriage 68 is returning to its starting position, the circular saw blade 70 cuts the next shortest piece of the laminated wooden workpiece 81, meaning that the flying saw 11 cuts in both directions of movement of the cross saw carriage 68 with the circular saw blade 70, which happens simultaneously with travelling of the longitudinal saw carriage 67. In this way, the circular saw blade 70 does not do any dead cycle while cutting.
The cutting force, produced with the circular saw blade 70 depends on the direction of its movement. Depending on the cutting direction, the cutting force is directed towards the supporting timing belt 71 in one direction and against it in the opposite direction.
As previously mentioned, the requested length of the shorter piece, which is cut of the laminated wooden workpiece 81 by the flying saw 11, is measured with the measuring wheel 76 at its entrance and rolls along the circumference of the laminated wooden workpiece 81.

The position of the cross saw carriage 68 is controlled with the unpresented measuring batten. Once the circular saw blade 70 cuts the laminated wooden workpiece 81 and is outside its area, the clamps 73 and 74 open and the longitudinal saw carriage 67 with the cross saw carriage 68 moves longitudinally back in the opposite direction of continuous travel of the laminated wooden workpiece 81, namely, on the new cutting position, determined by the measuring wheel 76.

In the flying saw 11, the shorter cut-off pieces of the laminated wooden workpiece 81 continue travelling to the stacking device, which is not presented.

## Claims

1. A production line for continuous longitudinal end-to-end jointing of oblong wooden workpieces with vertical finger joints which consists of an input chain conveyor (1) with fixed pusher dogs, at least one turning and feeding device (2) having at least one chain arm with swivel pusher dogs (12), at least two machining units (3), at least one main conveyor chain (4) constructed from sequentially movably joined spring gripping devices (28), and a diagonal chain conveyor (5), at least two auxiliary chain conveyors (6), an outfeed rotor (7), at least one angle infeed unit (8), at least one assembling unit (9), at least one continuous press (10) having an input unit (44) consisting of a pair of flat chains (46, 47) and an output unit (45) consisting of a pair of flat chains (48, 49); furthermore, it consists of at least one flying saw (11) with a longitudinal saw carriage (67) having a built-in cross saw carriage (68), whereby a timing belt (71) is fixed with both ends to the longitudinal saw carriage (67) via clamping plates (72) and thereby the mentioned production line units are positioned in the specified sequence and are joined together, whereby the production line is of angular construction, with the possibility of right or left installation, **is characterised by the fact that** said turning and feeding device (2) is positioned between the input chain conveyor (1) and the auxiliary chain conveyors (6) and lies at the main conveyor chain (4), wherein said input chain conveyor (1) is positioned in the same plane and parallel with the swivel pusher dogs (12), wherein the fixed pusher dogs of the input chain conveyor (1) are arranged to synchronously travel with the turning and feeding device (2), wherein by means of swivel pusher dogs (12) travelling by running wheels (24) on a clamp control cam 21, the workpieces (19) are gradually and continuously turned from the flat to the vertical position, whereby the swivel pusher dogs (12) and the fixed pusher dogs together form intermediate spaces, inside which they preserve the vertical position of the workpieces (19), wherein an individual chain arm of the turning and feeding device (2) consists of a continuous chain (13) with via pivots (25) pivotally clamped swivel pusher dogs (12) along its entire circumference, the swivel pusher dogs (12) being between themselves spaced apart by a distance that is slightly larger than the width of the workpieces (19).

2. The production line according to Claim 1 **is characterised by the fact** that said main conveyor chain (4) extends from the turning and feeding device (2) to the outfeed rotor (7) and lies between the turning and feeding device (2), the auxiliary chain conveyor (6), the diagonal chain conveyor (5) and the second machining unit (3) on one side and the first machining unit (3) and the auxiliary chain conveyor (6) on the other side.

3. The production line according to Claim 1 **is characterised by the fact** that an individual chain arm of the turning and feeding device (2) further consists of a drive sprocket (16), tensioning sprockets (14, 15) and a loading roll (18) with a drive chain (20) and a clamp control cam (21), whereby a helix (96) is constructed along the circumference of the loading roll (18).

4. The production line according to Claim 1 or 4 **is characterised by the fact that** the swivel pusher dogs (12) are constructed in the form of capital letter L having two legs (22, 23) and the pivot (25) at their intersection point, while, at the end of shorter horizontal leg (23), running wheels (24), which, in one part of the chain arm, run on an oblique clamp control cam (21), are pivotally clamped.

5. The production line according to Claim 1 **is characterised by the fact** that the spring gripping devices (28) with guiding wheels (42) travel within a top and a bottom linear guide (30) of C cross section, which are firmly fixed to a framework (29), whereby the spring gripping devices (28) are movably joined by dowel pins (89), which are inserted through a hole (90) in a chain link base body (33) and have at both ends a guiding wheel (42).

6. The production line according to Claim 5 **is characterised by the fact** that, between the linear guides (30), a clamp control cam (31) with an incline (82), which is height-adjustable with a lifting mechanism (32) and intended for opening a movable pressing clamp (38) in the spring gripping devices (28), is horizontally fixed to the framework (29) of the main conveyor chain (4).

7. The production line according to Claim 6 **is characterised by the fact** that at one end, the chain link base body (33) of the spring gripping device (28) has perpendicularly fastened a fixed clamp (39) and, on the opposite end, a fixed stop (83), whereas between the fixed clamp (39) and the fixed stop (83) there is positioned the movable pressing clamp (38) with a fixed guide (40) having a put on compression spring (41) abutting with one end on the movable pressing clamp (38) and with the other end on the stop (83).

8. The production line according to Claim 7 **is characterised by the fact** that, on each side of the chain link base body (33), via a centre of rotation (35), a swivel lever (34) of angular form, which has a running wheel (36) positioned at the bottom leg, is movably clamped on the chain link base body (33), whereas, with the opposite leg and via a hinge (37) is movably joined with the movable pressing clamp (38), whereby both swivel levers (34) are firmly joined between each other by a connective plate (84).

9. The production line according to Claim 6 **is characterised by the fact** that the spring gripping devices (28) are side guided by means of side stops (43), which, together with guiding wheels (42), travel within the linear guides (30) of C cross section.

10. The production line according to Claim 7 **is characterised by the fact** that into the clamping surface of the fixed clamp (39), vertical serrations (86) are constructed, while horizontal serrations (85) are constructed into the clamping surface of the movable pressing clamp (38).

11. The production line according to Claim 1 **is characterised by the fact** that a hydraulic cylinder (78) for pressing the workpieces (19) or a laminated wooden workpiece (81) and a differential gear (79) for setting the difference in speed between the pairs of the flat chains (46, 47) of the input unit (44) and the pairs of flat chains (48, 49) of the output unit (45) are positioned between the input unit (44), which is linearly movable, and the firmly fixed output unit (45), and at least one cross groove (51) is made into flat links (50) of the chains (46, 47, 48, 49).

12. The production line according to Claim 1 **is characterised by the fact** that the longitudinal saw carriage (67) of said flying saw (11) with the timing belt (71) travels synchronously, linearly forwards and backwards, in the direction of linear rail guides (66) on a framework (65).

13. The production line according to Claim 1 **is characterised by the fact** that the cross saw carriage (68) with a circular saw blade (70) is movable along a transverse guide (91) within the longitudinal saw carriage (67) backwards and forwards by means of a pneumatic cylinder (75).

14. The production line according to Claim 12 **is characterised by the fact** that a top clamp (73) and a pair of side clamps (74) for clamping a laminated wooden workpiece (81) are positioned on the longitudinal saw carriage (67).

15. A method for continuous production of vertical end-to-end joints and for gluing and jointing of oblong wooden workpieces (19) into laminated wooden workpieces (81) of extreme lengths and their cutting into selected lengths on the production line for continuous longitudinal end-to-end jointing of the workpieces (19) with vertical finger joints **is characterised by the fact** that the method includes the following operations, the sequence of which is as follows: flat insertion of oblong wooden workpieces (19) between the fixed pusher dogs (95) on the input chain conveyor (1) for travelling the workpieces (19) in a direction (A) to come linearly between the swivel pusher dogs (12) of the turning and feeding device (2);
- in the turning and feeding device (2), the workpieces (19) are turned, in a direction (B), from the flat to the vertical position by means of swivel pusher dogs (12), which, with running wheels (24), travel on the clamp control cam (21); that the workpieces (19) remain in the vertical position is enabled by the fixed pusher dogs of the input chain conveyor (1), which synchronously travel with the turning and feeding device (2), whereby the swivel pusher dogs (12) and the fixed pusher dogs together form intermediate spaces, inside which they preserve the vertical position of the workpieces (19);
- by means of the loading rolls (18) of the turning and feeding device (2), the workpieces (19) are inserted in a direction (C) into the open spring gripping devices (28) of the main conveyor chain (4) so that they protrude slightly outside with their ends; if the workpieces (19) are halted by the swivel pusher dogs (12), they are moved away from them by the loading rolls (18) by means of the helix (96) being constructed on the circumference of the loading rolls (18), whereupon the workpieces (19) can continue the travel undisturbed to said spring gripping devices (28); thereby, the space between the movable pressing clamp (38) and the fixed clamp (39) of the spring gripping devices (28) is, as a rule, larger than the width of the workpieces (19) and, before the start of said line, it is set with the clamp control cam (31), which opens the movable pressing clamp (38) by means of the swivel lever (34);
- when the oblong wooden workpieces (19) come through the spring gripping devices (28) to the stop, they are vertically aligned at the top by means of pneumatic pressing bars; afterwards the workpieces (19) are clamped again in the spring gripping devices (28) by means of the compression grips (41), which push the movable pressing clamps (38) towards the workpieces (19) being thereby pressed against the fixed clamps (39), whereby the movement of the workpieces (19) is additionally disabled by the horizontal serration (85) on the movable pressing clamps (38) and the vertical serration (86) on the fixed clamps (39);
- the workpieces (19) clamped in the spring gripping devices (28) travel past the first machining unit (3), which consists of a miter saw for aligning face edges and profile milling cutters for milling the teeth into the aligned face surfaces;
- after the workpieces (19) are one-sided toothed, in the area of the diagonal chain conveyor (5), the spring gripping devices (28) on the main conveyor chain (4) open and release the workpieces (19), afterwards pusher dogs of the diagonal chain conveyor (5) push them in direction D transversely through the spring gripping devices (28) to the auxiliary chain conveyor (6) so that their not yet machined ends protrude slightly over the edge of the clamps (38, 39) of the spring gripping devices (28);
- afterwards the workpieces (19) are aligned vertically, clamped into the spring gripping devices (28) and the not yet machined ends are machined in direction (E) in the second machining unit (3), machining is identical as previously described for the first machining unit (3), only that, additionally, the glue is applied to the produced toothing;
- after machining is finished on both sides, the movable pressing clamps (38) in the spring gripping devices (28) on the main conveyor chain (4) open and the workpieces (19) are, by means of the outfeed rotor (7), in direction (F), removed from the spring gripping devices (28) and then they are placed, in direction (G), on chain conveyor of the angle infeed unit (8), which then pushes them, in direction (H), between two side chains of the assembling unit (9), which are set to the width of the workpieces (19);
- on the mentioned assembling unit (9), the toothed ends of the workpieces (19), which travel one after another sequentially in direction (I), catch each other and are joined with vertical finger joints and in this way they form the laminated wooden workpiece (81) of extreme length;
- assembled in this way, the laminated wooden workpiece (81) reaches the input unit (44) of the continuous press (10), wherein, in direction (J), continuous pressing in the zones of vertical toothed areas is carried out up to the end of the output unit (45), in relation to which the force required for pressing vertical joints along the length of the laminated wooden workpiece (81) is formed because of the difference in travelling speed of the pair of flat chains (46, 47) of the input unit (44) and the pair of flat chains (48, 49) of the output unit (45) as the output pair travels slightly slower than the input pair, wherein the difference in the travelling speed of the former and the latter pair is regulated with the differential gear (79), which has a direct impact upon the size of the pressing force that presses the laminated wooden workpiece (81); at that, the input unit (44) is moved longitudinally in the direction of pressing by means of the hydraulic cylinder (78), wherein the hydraulic cylinder (78) serves for regulation of actually required pressing force in case of the slip of the flat links (50) on the surface of the laminated wooden workpiece (81); increasing the friction between said pairs of flat chains (46, 47) and (48, 49) is enabled by their flat links (50) with the constructed cross groove (51);
- the pressed laminated wooden workpiece (81) uninterrupted continues the travel from the continuous press (10) to the flying saw (11), through which it travels on the timing belt (71); at that, the longitudinal saw carriage (67) is positioned longitudinally towards the laminated wooden workpiece (81) in the position given by a measuring wheel (76) at the entrance into the continuous press (10), and, at the selected length, the longitudinal saw carriage (67), by means of the top clamp (73) and a pair of side clamps (74) firmly hugs the laminated wooden workpiece (81) and is clamped on it and travels further on linear rail guides (66) together with it in direction (K); during their joint travelling, the cross saw carriage (68) with the circular saw blade (70) comes perpendicularly to the longitudinal axis of the laminated wooden workpiece (81) and cuts it to the required length and, when the cross saw carriage (68) returns to its starting position, the circular saw blade (70) cuts the next shorter piece off the laminated wooden workpiece (81), which means that the flying saw (11), during simultaneous linear travel of the longitudinal saw carriage (67), cuts the laminated wooden workpiece (81) in both directions of movement of the cross saw carriage (68) with the circular saw blade (70), without any returning dead cycle; in relation to this, depending on the cutting direction of the circular saw blade (70), the cutting force is directed towards the supporting timing belt (71), and in the opposite direction of cutting, it is directed away from it; the position of the cross saw carriage (68) is controlled with measuring batten, whereby, when the circular saw blade (70) cuts the laminated wooden workpiece (81) and is outside its area, the clamps (73, 74) open and the longitudinal saw carriage (67), with the cross saw carriage (68) and the circular saw blade (70) positioned on it, moves longitudinally back in the opposite direction of continuous travel of the laminated wooden workpiece (81), namely, on the new cutting position, determined by the measuring wheel (76).

## Patentansprüche

1. Fertigungslinie zur kontinuierlichen Ende-zu-Ende-Verbindung länglicher Holzwerkstücke mit vertikalen Keilzinken, bestehend aus einem Eingangskettenförderer (1) mit fixierten Kipphebeln, zumindest einer Dreh- und Vorschubvorrichtung (2) mit zumindest einem Kettenarm mit Drehkipphebeln (12), zumindest zwei Bearbeitungseinheiten (3), zumindest einer Hauptförderkette (4), die aus aufeinanderfolgend beweglich verbundenen Federgreifvorrichtungen (28) besteht, und einem diagonalen Kettenförderer (5), zumindest zwei Hilfskettenförderern (6), einem Ausschleusungsrotor (7), zumindest einer Winkeleinspeisungseinheit (8), zumindest einer Zusammenfügungseinheit (9), zumindest einer kontinuierlichen Presse (10) mit einer Eingangseinheit (44), die aus einem Paar flacher Ketten (46, 47) besteht, und einer Ausgangseinheit (45), die aus einem Paar flacher Ketten (48, 49) besteht; ferner bestehend aus zumindest einer fliegenden Säge (11) mit einem länglichen Sägeschlitten (67) mit einem eingebauten Quersägeschlitten (68), wobei ein Zahnriemen (71) mit beiden Enden am länglichen Sägeschlitten (67) über Klemmplatten (72) fixiert ist und dadurch die genannten Fertigungslinieneinheiten in der spezifizierten Abfolge positioniert und miteinander verbunden werden, wobei die Fertigungslinie eine winkelige Konstruktion aufweist, mit der Möglichkeit einer rechten oder linken Installation, die durch die Tatsache gekennzeichnet ist, dass die Dreh- und Vorschubvorrichtung (2) zwischen dem Eingangskettenförderer (1) und den Hilfskettenförderern (6) positioniert ist und an der Hauptförderkette (4) liegt, wobei der Eingangskettenförderer (1) in derselben Ebene und parallel mit den Schwenkkipphebeln (12) positioniert ist, wobei die fixierten Kipphebel des Eingangskettenförderers (1) so angeordnet sind, dass sie sich synchron mit der Dreh- und Vorschubvorrichtung (2) bewegen, wobei mit Hilfe der Schwenkkipphebel (12), die sich durch Laufräder (24) auf einer Klemmsteuernocke (21) bewegen, die werkstücke (19) allmählich und kontinuierlich aus der flachen in die vertikale Position gedreht werden, wobei die Schwenkkipphebel (12) und die fixierten Kipphebel gemeinsam Zwischenräume bilden, in welchen sie die vertikale Position der Werkstücke (19) aufrechterhalten, wobei ein einzelner Kettenarm der Dreh- und Vorschubvorrichtung (2) aus einer kontinuierlichen Kette (13) mit über Drehpunkte (25) schwenkbar festgeklemmten Schwenkkipphebeln (12) entlang ihres gesamten Umfangs besteht, wobei die Schwenkkipphebel (12) untereinander durch einen Abstand beabstandet sind, der etwas größer als die Breite der Werkstücke (19) ist.

2. Fertigungslinie nach Anspruch 1, durch die Tatsache gekennzeichnet, dass sich die Hauptförderkette (4) von der Dreh- und Vorschubvorrichtung (2) zum Ausschleusungsrotor (7) erstreckt und zwischen der Dreh- und Vorschubvorrichtung (2), dem Hilfskettenförderer (6), dem diagonalen Kettenförderer (5) und der zweiten Bearbeitungseinheit (3) an einer Seite und der ersten Bearbeitungseinheit (3) und dem Hilfskettenförderer (6) an der anderen Seite liegt.

3. Fertigungslinie nach Anspruch 1, durch die Tatsache gekennzeichnet, dass ein einzelner Kettenarm der Dreh- und Vorschubvorrichtung (2) ferner aus einem Antriebsritzel (16), Spannritzeln (14, 15) und einer Ladewalze (18) mit einer Antriebskette (20) und einer Klemmsteuerungsnocke (21) besteht, wobei eine Helix (96) entlang des Umfangs der Ladewalze (18) konstruiert ist.

4. Fertigungslinie nach Anspruch 1 oder 4, durch die Tatsache gekennzeichnet, dass die Schwenkkipphebel (12) in der Form von Großbuchstaben L mit zwei Schenkeln (22, 23) und dem Drehpunkt (25) an ihrem Schnittpunkt konstruiert sind, während am Ende des kürzeren horizontalen Schenkels (23) Laufräder (24), die in einem Teil des Kettenarms auf einer schrägen Klemmsteuernocke (21) laufen, schwenkbar festgeklemmt sind.

5. Fertigungslinie nach Anspruch 1, durch die Tatsache gekennzeichnet, dass sich die Federgreifvorrichtungen (28) mit Führungsrädern (42) in einer oberen und unteren linearen Führung (30) mit C-Querschnitt bewegen, die fest an einem Rahmen (29) fixiert sind, wobei die Federgreifvorrichtungen (28) beweglich durch Spannstifte (89) verbunden sind, die durch ein Loch (90) in einem Kettengliederbasiskörper (33) eingesetzt sind und an beiden Enden ein Führungsrad (42) aufweisen.

6. Fertigungslinie nach Anspruch 5, durch die Tatsache gekennzeichnet, dass zwischen den linearen Führungen (30) eine Klemmsteuerungsnocke (31) mit einer Schräge (82), die mit einem Hebemechanismus (32) höhenverstellbar ist und zum öffnen einer beweglichen Pressklemme (38) in den Federgreifvorrichtungen (28) dient, horizontal am Rahmen (29) der Hauptförderkette (4) fixiert ist.

7. Fertigungslinie nach Anspruch 6, durch die Tatsache gekennzeichnet, dass der Kettengliederbasiskörper (33) der Federgreifvorrichtungen (28) an einem Ende senkrecht befestigt eine fixierte Klemme (39) und am anderen Ende einen fixierten Anschlag (83) aufweist, wobei zwischen der fixierten Klemme (39) und dem fixierten Anschlag (83) die bewegliche Pressklemme (38) mit einer fixierten Führung (40), an der eine Kompressionsfeder (41) angebracht ist, die an einem Ende an der beweglichen Pressklemme (38) und mit dem anderen Ende am Anschlag (83) anliegt, positioniert ist.

8. Fertigungslinie nach Anspruch 7, durch die Tatsache gekennzeichnet, dass an jeder Seite des Kettengliederbasiskörpers (33) ein Schwenkhebel (34) in winkeliger Form, der ein Laufrad (36) an seinem unteren Schenkel positioniert hat, über einen Drehmittelpunkt (35) beweglich an den Kettengliederbasiskörper (33) geklemmt ist, während er mit dem gegenüberliegenden Schenkel und über ein Scharnier (37) beweglich mit der beweglichen Pressklemme (38) verbunden ist, wobei beide Schwenkhebel (34) durch eine Verbindungsplatte (84) fest miteinander verbunden sind.

9. Fertigungslinie nach Anspruch 6, durch die Tatsache gekennzeichnet, dass die Federgreifvorrichtungen (28) seitlich durch seitliche Anschläge (43) geführt werden, die sich, gemeinsam mit Führungsrädern (42), innerhalb der linearen Führungen (30) mit C-Querschnitt bewegen.

10. Fertigungslinie nach Anspruch 7, durch die Tatsache gekennzeichnet, dass in der Klemmfläche der fixierten Klemme (39) vertikale Verzahnungen (86) konstruiert sind, während horizontale Verzahnungen (85) in der Klemmfläche der beweglichen Pressklemme (38) konstruiert sind.

11. Fertigungslinie nach Anspruch 1, durch die Tatsache gekennzeichnet, dass ein hydraulischer Zylinder (78) zum Pressen der Werkstücke (19) oder eines laminierten Holzwerkstücks (81) und ein Differentialgetriebe (79) zum Einstellen der Geschwindigkeitsdifferenz zwischen den Paaren der flachen Ketten (46, 47) der Eingangseinheit (44) und den Paaren von flachen Ketten (48, 49) der Ausgangseinheit (45) zwischen der Eingangseinheit (44), die linear beweglich ist, und der fest fixierten Ausgangseinheit (45) positioniert sind und zumindest eine Querrille (51) in flachen Gliedern (50) der Ketten (46, 47, 48, 49) ausgebildet ist.

12. Fertigungslinie nach Anspruch 1, durch die Tatsache gekennzeichnet, dass sich der längliche Sägeschlitten (67) der fliegenden Säge (11) synchron mit dem Zahnriemen (71) linear vorwärts und rückwärts in die Richtung linearer Schienenführungen (66) an einem Rahmen (65) bewegt.

13. Fertigungslinie nach Anspruch 1, durch die Tatsache gekennzeichnet, dass der Quersägeschlitten (68) mit einem kreisförmigen Sägeblatt (70) mit Hilfe eines pneumatischen Zylinders (75) entlang einer Querführung (91) innerhalb des länglichen Sägeschlittens (67) vorwärts und rückwärts bewegbar ist.

14. Fertigungslinie nach Anspruch 12, durch die Tatsache gekennzeichnet, dass eine obere Klemme (73) und ein Paar von Seitenklemmen (74) zum Festklemmen eines laminierten Holzwerkstücks (81) auf dem länglichen Sägeschlitten (67) positioniert sind.

15. Verfahren zur kontinuierlichen Fertigung vertikaler Ende-zu-Ende-Verbindungen und zum Kleben und Verbinden länglicher Holzwerkstücke (19) zu laminierten Holzwerkstücken (81) extremer Länge und zum Schneiden derselben in ausgewählte Längen auf der Fertigungslinie zur kontinuierlichen Ende-zu-Ende-Verbindung der Werkstücke (19) mit vertikalen Keilzinken, durch die Tatsache gekennzeichnet, dass das Verfahren die folgenden Schritte enthält, deren Abfolge wie folgt ist:
flaches Einsetzen länglicher Holzwerkstücke (19) zwischen den fixierten Kipphebeln (95) auf dem Eingangskettenförderer (1) zum Bewegen der Werkstücke (19) in einer Richtung (A), um linear zwischen die Schwenkkipphebel (12) der Dreh- und Vorschubvorrichtung (2) zu kommen;
- in der Dreh- und Vorschubvorrichtung (2) die Werkstücke (19) in eine Richtung (B) aus der flachen in die vertikale Position durch Schwenkkipphebel (12) gedreht werden, die sich mit Laufrädern (24) auf der Klemmsteuernocke (21) bewegen; dass die Werkstücke (19) in der vertikalen Position bleiben, durch die fixierten Kipphebel des Eingangskettenförderers (1) ermöglicht wird, die sich synchron mit der Dreh- und Vorschubvorrichtung (2) bewegen, wobei die Schwenkkipphebel (12) und die fixierten Kipphebel gemeinsam Zwischenräume bilden, in welchen sie die vertikale Position der Werkstücke (19) aufrechterhalten;
- mit Hilfe der Ladewalzen (18) der Dreh- und Vorschubvorrichtung (2) die Werkstücke (19) in einer Richtung (C) in die offenen Federgreifvorrichtungen (28) der Hauptförderkette (4) eingesetzt werden, sodass sie mit ihren Enden leicht nach außen ragen; falls die Werkstücke (19) durch die Schwenkkipphebel (12) gestoppt werden, sie von diesen durch die Ladwalzen (18) mit Hilfe der Helix (96) entfernt werden, die am Umfang der Ladewalzen (18) konstruiert ist, woraufhin die Werkstücke (19) die Bewegung unbehindert zu den Federgreifvorrichtungen (28) fortsetzen können; wodurch der Raum zwischen der beweglichen Pressklemme (38) und der fixierten Klemme (39) der Federgreifvorrichtungen (28) der Regel nach größer als die Breite der Werkstücke (19) ist und vor dem Starten der Linie mit der Klemmsteuernocke (31) eingestellt wird, die die bewegliche Pressklemme (38) mit Hilfe des Schwenkhebels (34) öffnet;
- wenn die länglichen Holzwerkstücke (19) durch die Federgreifvorrichtungen (28) zu einem Stopp kommen, sie an der Oberseite durch pneumatische Pressbalken vertikal ausgerichtet werden, wonach die Werkstücke (19) durch die Kompressionsgreifer (41), die die beweglichen Pressklemmen (38) zu den Werkstücken (19) pressen, die dadurch gegen die fixierten Klemmen (39) gepresst werden, wieder in die Federgreifvorrichtungen (28) geklemmt werden, wobei die Bewegung der Werkstücke (19) zusätzlich durch die horizontale Verzahnung (85) auf den beweglichen Pressklemmen (38) und die vertikale Verzahnung (86) auf den fixierten Klemmen (39) gesperrt ist;
- das Werkstück (19), das in den Federgreifvorrichtungen (28) festgeklemmt ist, sich an der ersten Bearbeitungseinheit (3) vorbei bewegt, die aus einer Gehrungssäge besteht, um Stirnseiten und Profilfräswerkzeuge zum Fräsen der Zähne in die ausgerichteten Seitenflächen auszurichten;
- nachdem die Werkstücke (19) an einer Seite mit Zähnen versehen wurden, sich die Federgreifvorrichtungen (28) auf dem Hauptkettenförderer (4) im Bereich des diagonalen Kettenförderers (5) öffnen und die Werkstücke (19) freigeben, wonach Kipphebel des diagonalen Kettenförderers (5) sie in Richtung D, quer durch die Federgreifvorrichtungen (28) zum Hilfskettenförderer (6) schieben, sodass ihre noch nicht bearbeiteten Enden leicht über den Rand der Klemmen (38, 39) der Federgreifvorrichtungen (28) ragen;
- danach die Werkstücke (19) vertikal ausgerichtet, in den Federgreifvorrichtungen (28) festgeklemmt werden und noch nicht bearbeitete Enden in Richtung (E) in der zweiten Bearbeitungseinheit (3) bearbeitet werden, wobei die Bearbeitung mit jener identisch ist, die zuvor für die erste Bearbeitungseinheit (3) beschrieben wurde, nur dass zusätzlich der Kleber auf die gefertigte Zahnung aufgebracht wird;
- nach Beendigung der Bearbeitung an beiden Seiten sich die beweglichen Pressklemmen (38) in den Federgreifvorrichtungen (28) auf der Hauptförderkette (4) öffnen und die Werkstücke (19) mit Hilfe des Ausschleusungsrotors (7) in eine Richtung (F) von den Federgreifvorrichtungen (28) entfernt werden und dann in Richtung (G) auf dem Kettenförderer der winkeleinspeisungseinheit (8) platziert werden, die sie dann in Richtung (H) zwischen zwei Seitenketten der Zusammenfügungseinheit (9) schiebt, die auf die Breite des Werkstücks (19) eingestellt sind;
- auf der genannten Zusammenfügungseinheit (9) die gezahnten Enden der Werkstücke (19), die sich der Reihe nach in Richtung (I) bewegen, einander erfassen und mit vertikalen Keilzinken verbunden werden und auf diese Weise das laminierte Holwerkstück (81) extremer Länge bilden;
- das auf diese Weise zusammengefügte, laminierte Holzwerkstück (81) die Eingangseinheit (44) der kontinuierlichen Presse (10) erreicht, wobei in Richtung (J) ein kontinuierliches Pressen in den Zonen vertikaler gezahnter Flächen bis zum Ende der Ausgangseinheit (45) ausgeführt wird, in Relation zu welchen die Kraft, die zum Pressen vertikaler Verbindungen entlang der Länge des laminierten Holzwerkstücks (81) erforderlich ist, aufgrund der Differenz in der Bewegungsgeschwindigkeit des Paares flacher Ketten (46, 47) der Eingangseinheit (44) und des Paares flacher Ketten (48, 49) der Ausgangseinheit (45) gebildet wird, da sich das Ausgangspaar etwas langsamer bewegt als das Eingangspaar, wobei die Differenz in der Bewegungsgeschwindigkeit des erstgenannten und des letztgenannten Paares mit dem Differentialgetriebe (79) reguliert wird, was eine direkte Auswirkung auf die Größe der Presskraft hat, die das laminierte Holzwerkstück (81) presst; dabei wird die Eingangseinheit (44) in Längsrichtung in die Richtung der Pressung durch den hydraulischen Zylinder (78) bewegt, wobei der hydraulische Zylinder (78) zur Regulierung der tatsächlich erforderlichen Presskraft im Fall eines Rutschens der flachen Glieder (50) auf der Oberfläche des laminierten Holzwerkstücks (81) dient; wobei eine Erhöhung einer Reibung zwischen den Paaren flacher Ketten (46, 47) und (48, 49) durch ihre flachen Glieder (50) mit der konstruierten Querrille (51) ermöglicht wird;
- das gepresste laminierte Holzwerkstück (81) die Bewegung von der kontinuierlichen Presse (10) zur fliegenden Säge (11) ununterbrochen fortsetzt, wobei es sich auf dem Zahnriemen (71) bewegt; dabei wird der längliche Sägeschlitten (67) der Länge nach zum laminierten Holzwerkstück (81) in der Position positioniert, die durch ein Messrad (76) am Eingang in die kontinuierliche Presse (10) vorgegeben ist, und bei der gewählten Länge der längliche Sägeschlitten (67), mit Hilfe der oberen Klemme (73) und einem Paar von Seitenklemmen (74), das laminierte Holzwerkstück (81) fest erfasst und an diesem festgeklemmt wird und sich auf linearen Schienenführungen (66) gemeinsam mit diesem in Richtung (K) bewegt; wobei der Quersägeschlitten (68) mit dem kreisförmigen Sägeblatt (70), während ihrer gemeinsamen Bewegung, senkrecht zu der Längsachse des laminierten Holzwerkstücks (81) kommt und dieses auf die erforderliche Länge schneidet, und, wenn der Quersägeschlitten (68) in seine Ausgangsposition zurückehrt, das kreisförmige Sägeblatt (70) das nächstkürzere Stück von dem laminierten Holzwerkstück (81) abschneidet, was bedeutet, dass die fliegende Säge (11) während einer gleichzeitigen linearen Bewegung des länglichen Sägeschlittens (67) das laminierte Holzwerkstück (81) in beiden Bewegungsrichtungen des Quersägeschlittens (68) mit dem kreisförmigen Sägeblatt (70) schneidet, ohne toten Rücklaufzyklus; in Relation dazu, abhängig von der Schneidrichtung des kreisförmigen Sägeblatts (70), die Schneidekraft auf den tragenden Zahnriemen (71) gerichtet ist und in der entgegengesetzten Schneiderichtung von jenem weg gerichtet ist; die Position des Quersägeschlittens (68) mit Messlatten gesteuert wird, wobei, wenn das kreisförmige Sägeblatt (70) das laminierte Holzwerkstück (81) schneidet und sich außerhalb seines Bereichs befindet, die Klemmen (73, 74) sich öffnen und der längliche Sägeschlitten (67) mit dem Quersägeschlitten (68) und dem darauf positionierten kreisförmigen Sägeblatt (70) sich in Längsrichtung in entgegengesetzter Richtung zur kontinuierlichen Bewegung des laminierten Holzwerkstücke (81) zurück bewegt, nämlich zur neuen Schneideposition, die durch das Messrad (76) bestimmt wird.

## Revendications

1. Ligne de production pour une jonction bout à bout longitudinale continue de pièces en bois oblongues avec des joints par entures multiples verticales, laquelle consiste en un convoyeur à chaîne d'entrée (1) avec des taquets poussoirs fixes, au moins un dispositif de retournement et d'alimentation (2) ayant au moins un bras de chaîne avec des taquets poussoirs pivotants (12), au moins deux unités d'usinage (3), au moins une chaîne de convoyage principale (4) réalisée à partir de dispositifs de préhension à ressort (28) réunis séquentiellement de façon mobile, et un convoyeur à chaîne diagonale (5), au moins deux convoyeurs à chaîne auxiliaires (6), un rotor de déchargement (7), au moins une unité d'amenée d'angle (8), au moins une unité d'assemblage (9), au moins une presse en continu (10) ayant une unité d'entrée (44) consistant en une paire de chaînes plates (46, 47) et une unité de sortie (45) consistant en une paire de chaînes plates (48, 49) ; laquelle consiste en outre en au moins une scie volante (11) avec un chariot de scie longitudinal (67) ayant un chariot de scie transversal intégré (68), moyennant quoi une courroie crantée (71) est fixée avec les deux extrémités au chariot de scie longitudinal (67) via des plaques de serrage (72) et les unités de ligne de production mentionnées sont donc positionnées dans la séquence spécifiée et sont réunies ensemble, moyennant quoi la ligne de production est de construction angulaire avec la possibilité d'une installation de droite ou gauche, **caractérisée en ce que** ledit dispositif de retournement et d'alimentation (2) est positionné entre le convoyeur à chaîne d'entrée (1) et les convoyeurs à chaîne auxiliaires (6) et se situe au niveau de la chaîne de convoyage principale (4), moyennant quoi ledit convoyeur à chaîne d'entrée (1) est positionné dans le même plan et parallèlement aux taquets poussoirs pivotants (12); dans lequel les taquets poussoirs fixes du convoyeur à chaîne d'entrée (1) sont disposés de manière à se déplacer de façon synchrone avec le dispositif de retournement et d'alimentation (2), dans lequel, au moyen de taquets poussoirs pivotants (12) se déplaçant grâce à des roues de roulement (24) sur une came de commande de serrage (21), les pièces (19) sont progressivement retournées en continu de la position à plat à la position verticale, moyennant quoi les taquets poussoirs pivotants (12) et les taquets poussoirs fixes forment ensemble des espaces intermédiaires à l'intérieur desquels ils préservent la position verticale des pièces (19), dans lequel un bras de chaîne individuel du dispositif de retournement et d'alimentation (2) consiste en une chaîne continue (13) avec des taquets poussoirs pivotants (12) serrés de manière pivotante via des pivots (25) le long de toute sa circonférence, les taquets poussoirs pivotants (12) étant espacés entre eux d'une distance légèrement supérieure à la largeur des pièces (19).

2. Ligne de production selon la revendication 1, **caractérisée en ce que** ladite chaîne de convoyage principale (4) s'étend depuis dispositif de retournement et d'alimentation (2) jusqu'au rotor de déchargement (7) et se situe entre le dispositif de retournement et d'alimentation (2), le convoyeur à chaîne auxiliaire (6), le convoyeur à chaîne diagonale (5) et la deuxième unité d'usinage (3) d'un côté, et la première unité d'usinage (3) et le convoyeur à chaîne auxiliaire (6) de l'autre côté,

3. Ligne de production selon la revendication 1, **caractérisée en ce qu'**un bras de chaîne individuel du dispositif de retournement et d'alimentation (2) consiste en outre en un pignon d'entraînement (16), des pignons tendeurs (14, 15), et un rouleau de chargement (18) avec une chaîne d'entraînement (20) et une came de commande de serrage (21), moyennant quoi une hélice (96) est réalisée le long de la circonférence du rouleau de chargement (18).

4. Ligne de production selon la revendication 1 ou 4, **caractérisée en ce que** les taquets poussoirs pivotants (12) sont réalisés en forme d'une lettre majuscule L ayant deux bras (22, 23) et le pivot (25) au niveau de leur point d'intersection, alors qu'à l'extrémité du bras horizontal plus court (23), des roues de roulement (24), lesquelles, dans une partie du bras de chaîne, roulent sur une came de commande de serrage oblique (21), sont serrées de manière pivotante.

5. Ligne de production selon la revendication 1, **caractérisée en ce que** les dispositifs de préhension à ressort (28) avec des roues de guidage (42) se déplacent à l'intérieur d'un guide linéaire du haut et du bas (30) de section transversale C, lesquels sont fixés fermement à une armature (29), moyennant quoi les dispositifs de préhension à ressort (28) sont réunis de manière mobile par des goupilles de serrage (89) qui sont insérées à travers un trou (90) dans un corps de base de maille de chaîne (33) et ont une roue de guidage (42) aux deux extrémités.

6. Ligne de production selon la revendication 5, **caractérisée en ce que**, entre les guides linéaires (30), une came de commande de serrage (31) avec une inclinaison (82), laquelle est ajustable en hauteur avec un mécanisme de levage (32) et prévue pour ouvrir une attache de pressage mobile (38) dans les dispositifs de préhension à ressort (28), est fixée horizontalement à l'armature (29) de la chaîne de convoyage principale (4).

7. Ligne de production selon la revendication 6, **caractérisée en ce qu'**à une extrémité, le corps de base de maille de chaîne (33) du dispositif de préhension à ressort (28) a une attache fixe (39) fixée perpendiculairement et, à l'extrémité opposée, un butoir fixe (83), alors qu'entre l'attache fixe (39) et le butoir fixe (83) est positionnée l'attache de pressage mobile (38) avec un guide fixe (40) ayant un ressort de compression (41) mis en place, arrivant en butée avec une extrémité contre l'attache de pressage mobile (38) et avec l'autre extrémité, contre le butoir (83).

8. Ligne de production selon la revendication 7, **caractérisée en ce que**, de chaque côté du corps de base de maille de chaîne (33), via un centre de rotation (35), un levier pivotant (34) de forme angulaire, qui a une roue de roulement (36) positionnée au niveau du côté d'angle du bas, est serré de manière mobile sur le corps de base de maille de chaîne (33) alors qu'avec le côté d'angle opposé et via une articulation (37), il est réuni de manière mobile avec l'attache de pressage mobile (38), moyennant quoi les deux leviers pivotants (34) sont réunis fermement entre eux par une plaque de connexion (84).

9. Ligne de production selon la revendication 6, **caractérisée en ce que** les dispositifs de préhension à ressort (28) sont guidés latéralement au moyen de butoirs latéraux (43) lesquels, ensemble avec des roues de guidage (42), se déplacent à l'intérieur des guides linéaires (30) de section transversale C.

10. Ligne de production selon la revendication 7, **caractérisée en ce que**, dans la surface de serrage de l'attache fixe (39), des dentelures verticales (86) sont réalisées, alors que des dentelures horizontales (85) sont réalisées dans la surface de serrage de l'attache de pressage mobile (38).

11. Ligne de production selon la revendication 1, **caractérisée en ce qu'**un cylindre hydraulique (78) pour presser les pièces (19) ou pièces en bois stratifié (81) et un engrenage différentiel (79) pour régler la différence de vitesse entre les paires de chaînes plates (46, 47) de l'unité d'entrée (44) et les paires de chaînes plates (48, 49) de l'unité de sortie (45) sont positionnés entre l'unité d'entrée (44) qui est mobile linéairement et l'unité de sortie fermement fixe (45), et qu'au moins une rainure transversale (51) est formée dans des mailles plates (50) des chaînes (46, 47, 48, 49).

12. Ligne de production selon la revendication 1, **caractérisée en ce que** le chariot de scie longitudinal (67) de ladite scie volante (11) avec la courroie crantée (71) se déplace de manière synchrone, linéairement, vers l'avant et l'arrière dans la direction de guides de rail linéaires (66) sur une armature (68).

13. Ligne de production selon la revendication 1, **caractérisée en ce que** le chariot de scie transversal (68) avec une lame de scie circulaire (70) est mobile le long d'un guide transversal (91) à l'intérieur du chariot de scie longitudinal (67), en arrière et en avant, au moyen d'un cylindre pneumatique (75).

14. Ligne de production selon la revendication 12, **caractérisée en ce qu'**une attache supérieure (73) et une paire d'attaches latérales (74) pour serrer une pièce en bois stratifié (81) sont positionnées sur le chariot de scie longitudinal (67).

15. Procédé pour une production en continu de jonctions bout à bout et pour coller et jointer des pièces en bois oblongues (19) en des pièces en bois stratifié (81) de longueurs extrêmes et leur découpage à des longueurs sélectionnées sur la ligne de production pour la jonction bout à bout longitudinale continue des pièces (19) avec des joints par entures multiples verticales, **caractérisé en ce que** le procédé comprend les opérations suivantes, dont la séquence est telle que suit :
insertion à plat de pièces en bois oblongues (19) entre les taquets poussoirs fixes (95) sur le convoyeur à chaîne d'entrée (1) pour transporter les pièces (19) dans une direction (A) pour arriver linéairement entre les taquets poussoir pivotants (12) du dispositif de retournement et d'alimentation (2) ;
- dans le dispositif de retournement et d'alimentation (2), les pièces (19) sont retournées dans une direction (B), de la position à plat à la position verticale, au moyen de taquets poussoirs pivotants (12) lesquels, avec des roues de roulement (24), se déplacent sur la came de commande de serrage (21) ; le fait que les pièces (19) restent dans la position verticale est permis par les taquets poussoir fixes du convoyeur à chaîne d'entrée (1), lesquels se déplacent de manière synchrone avec le dispositif de retournement et d'alimentation (2), moyennant quoi les taquets poussoirs pivotants (12) et les taquets poussoirs fixes forment ensemble des espaces intermédiaires à l'intérieur desquels ils préservent la position verticale des pièces (19) ;
- au moyen des rouleaux de chargement (18) du dispositif de retournement et d'alimentation (2), les pièces (19) sont insérées dans une direction (C) dans les dispositifs de préhension à ressort (28) ouverts de la chaîne de convoyage principale (4) de sorte qu'elles dépassent légèrement vers l'extérieur avec leurs extrémités; si les pièces (19) sont retenues par les taquets poussoirs pivotants (12), elles sont éloignées de ceux-ci par les rouleaux de chargement (18) au moyen de l'hélice (96) réalisée sur la circonférence des rouleaux de chargement (18), après quoi les pièces (19) peuvent continuer de se déplacer sans perturbation vers lesdits dispositifs de préhension à ressort (28) ; l'espace entre l'attache de pressage mobile (38) et l'attache fixe (39) des dispositifs de préhension à ressort (28) étant donc, en règle générale, plus grand que la largeur des pièces (19) et, avant le démarrage de ladite ligne, est réglé avec la came de commande de serrage (31) qui ouvre l'attache de pressage mobile (38) au moyen du levier pivotant (34) ;
- lorsque les pièces en bois oblongues (19) arrivent via les dispositifs de préhension à ressort (28) jusqu'au butoir, elles sont alignées verticalement sur le haut au moyen de barres de pression pneumatiques; après quoi les pièces (19) sont de nouveau serrées dans les dispositifs de préhension à ressort (28) au moyen des attaches de compression (41) qui poussent les attaches de pressage mobiles (38) vers les pièces (19) qui sont donc pressées contre les attaches fixes (39), moyennant quoi le mouvement des pièces (19) est additionnellement bloqué par la dentelure horizontale (85) sur les attaches de pressage mobiles (38) et la dentelure verticale (86) sur les attaches fixes (39) ;
- les pièces (19) serrées dans les dispositifs de préhension à ressort (28) se déplacent en passant par la première unité d'usinage (3) qui consiste en une scie à onglets pour aligner des bords frontaux et des fraises de profil pour le fraisage des dents dans les surfaces frontales alignées ;
- une fois que les pièces (19) sont dentées d'un côté, dans la zone du convoyeur à chaîne diagonale (5), les dispositifs de préhension à ressort (28) sur la chaîne de convoyage principale (4) s'ouvrent et libèrent les pièces (19) après quoi des taquets poussoir du convoyeur à chaîne diagonale (5) les poussent en direction D transversalement à travers les dispositifs de préhension à ressort (28) vers le convoyeur à chaîne auxiliaire (6) de sorte que leurs extrémités non encore usinées dépassent légèrement par-dessus le bord des attaches (38, 39) des dispositifs de préhension à ressort (28) ;
- après quoi les pièces (19) sont alignées verticalement, serrées dans les dispositifs de préhension à ressort (28) et les extrémités non encore usinées sont usinées en direction (E) dans la deuxième unité d'usinage (3), l'usinage étant identique à ce qui est précédemment décrit pour la première unité d'usinage (3) à l'exception du fait que de la colle est additionnellement appliquée à la denture produite ;
- une fois que l'usinage est terminé des deux côtés, les attaches de pressage mobiles (38) dans les dispositifs de préhension à ressort (28) sur la chaîne de convoyage principale (4) s'ouvrent et les pièces (19) sont, au moyen du rotor de déchargement (7), enlevées en direction (F) des dispositifs de préhension à ressort (28) et sont ensuite placées en direction (G) sur le convoyeur à chaîne de l'unité d'amenée d'angle (8), laquelle les pousse alors en direction (H) entre deux chaînes latérales de l'unité d'assemblage (9), lesquelles sont réglées à la largeur des pièces (19) ;
- au niveau de l'unité d'assemblage mentionnée (9), les extrémités dentées des pièces (19), lesquelles se déplacent l'une après l'autre de manière séquentielle en direction (I), se saisissent les unes les autres et sont réunies avec des joints par entures multiples verticales et forment de cette manière la pièce en bois stratifié (81) de longueur extrême ;
- assemblée de cette manière, la pièce en bois stratifiée (81) atteint l'unité d'entrée (44) de la presse en continu (10), dans laquelle, en direction (J), un pressage continu dans les zones à superficies dentées verticales est réalisé jusqu'à la fin de l'unité de sortie (45), en rapport avec quoi la force requise pour presser des joints verticaux le long de la longueur de la pièce en bois stratifié (81) est formée en raison de la différence de vitesse de déplacement de la paire de chaînes plates (46, 47) de l'unité d'entrée (44) et la paire de chaînes plates (48, 49) de l'unité de sortie (45) alors que la paire de sortie se déplace un peu plus lentement que la paire d'entrée, dans lequel la différence de vitesse de déplacement de la première et la deuxième paire est régulée avec l'engrenage différentiel (79), lequel a un impact direct sur l'importance de la force de pressage qui presse la pièce en bois stratifié (81) ; là, l'unité d'entrée (44) est déplacée longitudinalement dans la direction de pressage au moyen du cylindre hydraulique (78), dans lequel le cylindre hydraulique (78) sert pour la régulation d'une force de pressage réellement requise dans un cas de glissement des mailles plates (50) sur la surface de la pièce en bois stratifié (81); l'augmentation de la friction entre lesdites paires de chaînes plates (46, 47) et (48, 49) est permise grâce à leurs mailles plates (50) avec la rainure transversale (51) réalisée ;
- la pièce en bois stratifié pressée (81) poursuit sans interruption le déplacement depuis la presse en continu (10) jusqu'à la scie volante (11) grâce à quoi elle se déplace sur la courroie crantée (71); là, le chariot de scie longitudinal (67) est positionné longitudinalement vers la pièce en bois stratifié (81) dans la position donnée par une roue d'arpenteur (76) à l'entrée dans la presse en continu (67) et, à la longueur sélectionnée, le chariot de scie longitudinal (67), au moyen de l'attache supérieure (73) et d'une paire d'attaches latérales (74), serre fermement la pièce en bois stratifié (81) et est serré sur celle-ci et se déplace plus loin sur des guides de rail linéaires (66), ensemble avec elle, en direction (K) ; pendant leur déplacement ensemble, le chariot à scie transversal (68) avec la lame de scie circulaire (70) arrive perpendiculairement à l'axe longitudinal de la pièce en bois stratifié (81) et la coupe à la longueur requise et, lorsque le chariot de scie transversal (68) revient dans sa position de départ, la lame de scie circulaire (70) coupe la pièce plus courte suivante à partir de la pièce en bois stratifié (81), ce qui signifie que la scie volante (11), pendant le déplacement linéaire simultané du chariot de scie longitudinal (67), coupe la pièce en bois stratifié (81) dans les deux directions de déplacement du chariot de scie transversal (68) avec la lame de scie circulaire (70) sans aucun cycle de temps mort de retour ; en rapport avec cela, en fonction de la direction de coupe de la lame de scie circulaire (70), la force de coupe est orientée vers la courroie crantée de support (71), et dans la direction de coupe opposée, elle en est orientée en éloignement ; la position du chariot de scie transversal (68) est contrôlée avec une latte de mesure, moyennant quoi, lorsque la lame de scie circulaire (70) coupe la pièce en bois stratifié (81) et est en-dehors de sa superficie, les attaches (73, 74) s'ouvrent et le chariot de scie longitudinal (67), avec le chariot de scie transversal (68) et la lame de scie circulaire (70) positionnée dessus, se déplace longitudinalement en retour dans la direction opposée de déplacement continu de la pièce en bois stratifié (81), à savoir, dans la nouvelle position de coupe déterminée par la roue d'arpenteur (76).
